# EUROPÄISCHE PATENTSCHRIFT

(11) **EP 2 582 874 B1**
(45) Veröffentlichungstag und Bekanntmachung des Hinweises auf die Patenterteilung: **03.09.2014**
(21) Anmeldenummer: 10757385.9
(22) Anmeldetag: 15.06.2010
(51) Int. Cl.: D06N 3/14

(54) **FORMATZUSCHNITT**
CUT-TO-SIZE FORMAT
DÉCOUPE AU FORMAT

(43) Veröffentlichungstag der Anmeldung: 24.04.2013
(73) Patentinhaber: LANXESS Deutschland GmbH, 50569 Köln (DE)
(72) Erfinder: ROLF, Matthias, 30519 Hannover (DE); SCHAEFER, Philipp, 30175 Hannover (DE)
(86) Internationale Anmeldenummer: PCT/EP2010/003588
(87) Internationale Veröffentlichungsnummer: WO 2011/157279

(56) Entgegenhaltungen:
- WO-A1-01/25530
- DE-U1-202004 004 807

## Beschreibung

Die Erfindung betrifft einen Formatzuschnitt gemäß dem Oberbegriff des Patentanspruchs 1 und somit einen Formatzuschnitt umfassend ein mit einem Faservlies und/oder Gewirke und/oder Gewebe aus Polyamid- und/oder Polyesterfäden, insbesondere Polyamid- und/oder Polyestermikrofasern und/oder Baumwollfäden, gebildetes, insbesondere bahnenförmiges bzw. schlichtförmiges, Trägermaterial (2) und eine auf dem Trägermaterial (2) aufgebrachte Beschichtung (4), die mit Polyurethandispersion auf einer strukturierten Silikonkautschukunterlage bzw. -form gebildet ist und über eine mit Polyurethandispersion gebildete, eigene Kleberschicht (7) an dem Trägermaterial (2) angebunden ist, dadurch **gekennzeichnet,**
- dass die Beschichtung (4) mit zwei miteinander verbundenen Schichten aufgebaut ist und eine oberflächlich gelegene Oberschicht (4') und eine darunter liegende Zwischenschicht (4") umfasst,
- wobei die Beschichtung (4) mit einer verfestigten Polyurethandispersionsmischung erstellt ist, die zwischen 2 und 10 Gew.-% nicht emigrierbares Polysiloxan enthält und vernetzt ist,
- wobei in allen Schichten (4', 4") der Beschichtung (4) und in der Kleberschicht (7) ein Vernetzer enthalten ist und die einzelnen Schichten (4', 4") und die Kleberschicht (7) durch Aneinanderfügen in noch feuchtem oder nassem Zustand miteinander quervernetzt sind,
- dass weiters zur Verbindung zwischen der Zwischenschicht (4") bzw. der Kleberschicht (7) und dem Trägermaterial (2) die mit Polyurethandispersion gebildete Kleberschicht (7) zu 10 bis 40 %, vorzugsweise 10 bis 20 %, der Dicke des Trägermaterials (2) in dieses eingedrungen bzw. eingezogen ist,
- wobei die mit Polyurethandispersion gebildete Kleberschicht (7) 0,02 bis 0,6 mm, vorzugsweise 0,05 bis 0,4 mm, tief in die Trägerschicht (2) eingezogen bzw. eingebracht ist,
- dass weiters im Trägermaterial (2) maximal 30 Gew.-%, vorzugsweise maximal 20 Gew.-%, der Gesamtmenge der im Formatzuschnitt (1) enthaltenen verfestigten Polyurethandispersion vorliegen,
- dass die Bereiche (3) des Trägermaterials (2), in welche die Polyurethandispersion der Kleberschicht (7) beim Auftragen kontrolliert eingedrungen ist, eine Dichte besitzen, welche zwischen 15 % und 55 %, vorzugsweise zwischen 20 und 35 %, über der Dichte der restlichen bzw. der polyurethanfreien Bereiche des Trägermaterials (2) liegt,
- dass das gesamte Polyurethan-Flächengewicht des Formatzuschnittes (1) 60 bis 240 g/m² beträgt, wobei dieses Flächengewicht auch allenfalls bereits im Trägermaterial (2) vorliegendes bzw. in dieses bei dessen Herstellung eingebrachtes Polyurethan umfasst,
- dass das Flächengewicht des Trägermaterials (2), gegebenenfalls samt darin enthaltenem Polyurethan, 200 bis 450 g/m² beträgt,
   dass die Beschichtung (4) mit einer Polyurethandispersion erstellt ist, die eine Härte von weniger als 68 Shore A besitzt,
- dass die Kleberschicht (7) mit einer mit einem Flächengewicht von 20 bis 80 g/m² aufweisenden, gegebenenfalls Polyacrylate und/oder Kunstharze enthaltenden, Schicht einer Polyurethandispersion gebildet ist, und vorzugsweise einen sehr ähnlichen chemischen Aufbau wie die Polyurethandispersionsschicht (4") besitzt, und
- dass die Zwischenschicht (4") und die Kleberschicht (7) eine Härte von weniger als 48 Shore A, vorzugsweise zwischen 20 und 35 Shore A, besitzen.

Aus der DE 26 08 781 C2 ist ein lederähnliches Substrat mit einem textilen Trägerkörper bekannt, der mit einem polymeren Kunststoffschaum getränkt ist. Dieser Trägerkörper besteht aus einem Vlies oder Gewirke, das von seiner Oberfläche ausgehend in einem Bereich zwischen 20 und 60 % seiner Gesamtdicke getränkt ist. Der Kunststoffschaum weist durch Einbringen von Luft gebildete offene Zellen auf und enthält des weiteren geschlossene Zellen bildende Mikrohohlkugeln. Auf die geschliffene Oberfläche ist eine dünne PUR-Beschichtung aufgebracht. Dieser Träger besitzt einen hohen Kohlenstoffanteil aufgrund des in den Mikrohohlkugeln enthaltenen CO₂-Gases; das Material ist hart bzw. lässt seine Haptik zu wünschen übrig. Zur Erzielung eines nubukartigen Aussehens muss die Oberfläche nach der Substratbeschichtung geschliffen werden.

Aus der DE 200 10 978 U1 ist ein Substrat bekannt, das an seiner Oberfläche mit einer Beschichtung aus einer vernetzten Polyurethanschicht versehen ist, die durch eine Kleberschicht mit der Oberfläche des Substrates verbunden ist. Bei diesem Substrat besteht vor allem der Nachteil, dass beim Knicken störende Falten verbleiben und dass kein definiertes Eindringen der aufgebrachten Beschichtung in das Trägermaterial vorliegt.

Gemäß der DE 20 2004 004 807 ist auf einem aus Fasermaterial gebildeten Grundkörper eine Beschichtung aus Kunststoff aufgebracht. Der Grundkörper besteht aus wenigstens zwei Schichten, wobei die der Beschichtung zugekehrte Schicht des Trägerkörpers von einem Vlies aus Mikrofasern gebildet ist, bei dem die Hohlräume zwischen den Mirkofasern zumindest teilweise mit einem koagulierten Kunststoffmaterial gefüllt sind. Ein derartiges Substrat enthält eine beträchtliche Menge an Polyurethan und die zum Verbinden der beiden Vliese eingesetzte Polyurethanmenge kommt der Menge an Polyurethan nahe, welche für die Beschichtung eingesetzt wird.

Gemäß der DE 203 18 906 U1 wird eine dünne Beschichtung auf einem Träger aufgebracht, wobei die auf die raue Trägeroberfläche aufgebrachte Beschichtung zum Schwimmen neigt, da kein Eindringen der Beschichtung in den Träger vorgesehen ist.

Ziel der Erfindung ist es, einen Formatzuschnitt zu erstellen, welcher auch bei einer Dicke von 1 mm oder auch mehr bei geringem Gewicht hervorragende mechanische Eigenschaften, insbesondere optimales Dauerbiegungsverhalten auch bei Temperaturen unterhalb des Nullpunktes besitzt. Ferner soll der Formatzuschnitt hohe Abriebfestigkeit sowie Farb- und Lichtechtheit und hohe Reißfestigkeit und insbesondere annähernd gleiche Dehnbarkeit und Reißfestigkeit in zueinander senkrecht stehenden Richtungen besitzen. Ferner soll der Formatzuschnitt entsprechend seinem Verwendungszweck eine Beschichtung besitzen, die entweder weitgehend wasserdicht, z.B. für Motorradsitze, Sitzbezüge oder Reisegepäck oder wasserdampfdurchlässig ausgebildet sein kann, wie z.B. für Autoinnenverkleidungen, Polstermöbelbezüge sowie Schuhobermaterial. Des weiteren soll der Formatzuschnitt die Struktur des textilen Trägermaterials auf der feinen, weichen und dünnen Beschichtung nicht oder nicht störend sichtbar werden lassen, wobei die Beschichtung mit dem textilen Trägermaterial dauerhaft verbunden sein soll. Des weiteren soll der erfindungsgemäße Formatzuschnitt beim Betasten mit der Hand oder bei Anlage am Körper, anders als bei herkömmlichen Bahnwaren-Kunstledern mit einer schweren dicken Beschichtung, sich in sehr kurzer Zeit an die Körpertemperatur anpassen bzw. sich ein Temperaturausgleich einstellen, sodass verbesserte Haptik und erhöhter Komfort vorliegen.

Ferner soll die auf dem textilen Trägermaterial aufgebrachte dünne Beschichtung beim Knicken, auch beim Abknicken um einen spitzen Winkel, keine Knickfalte ausbilden, wie dies der Fall ist, wenn sich eine dünne Beschichtung auf einem leichten, voluminösen Vliesträger befindet oder wenn eine dünne Beschichtung auf einer fasrigen Oberfläche schwimmt. Eine der wichtigsten Aufgaben ist es, einen textilen Träger mit einer Beschichtung zu versehen, welche vor allem eine textile und/oder nubukähnliche Feinstruktur zeigt.

Eine weitere wichtige Aufgabe ist auch, dass die Formatzuschnitte in kleinen Mengen, ohne teure aufwendige Werkzeuge mit jeweils vom Markt gewünschten Oberflächen hinsichtlich Aussehen, Haptik und Friktion auf unterschiedlichen Trägermaterialien, die aus Bahnware herausgeschnitten sind, gefertigt werden können. Eine weitere wichtige Aufgabe ist es, einen Formatzuschnitt zu erstellen, welcher die Grenzwertforderungen der Fährzeugindustrie hinsichtlich Kohlenstoffemission erfüllt und welcher bei seiner Herstellung auch unter Berücksichtigung aller eingesetzten Komponenten eine günstige CO₂-Bilanz besitzt und das bei geringem Wasserverbrauch.

Diese Ziele werden bei einem Formatzuschnitt der eingangs genannten Art dadurch erreicht, dass der gesamte Polyurethangehalt des Formatzuschnittes 60 bis 240 g/m², vorzugsweise 80 bis 150 g/m², insbesondere 100 bis 140 g/m², beträgt, wobei dieses Flächengewicht auch allenfalls bereits im Trägermaterial vorliegendes bzw. in dieses bei dessen Herstellung eingebrachtes Polyurethan umfasst und dass das Flächengewicht des Trägermaterials samt allenfalls darin enthaltenem Polyurethan 200 g/m² bis 450 g/m², vorzugsweise 200 g/m² bis 350 g/m², insbesondere 230 g/m² bis 270 g/m², beträgt.

Der erfindungsgemäße Formatzuschnitt ist leichtgewichtig, strapazierfähig und besitzt eine gute Dehnbarkeit und Reißfestigkeit, die in zueinander senkrecht stehenden Richtungen auf seiner Oberfläche im Wesentlichen homogen bzw. gleichartig sind. Die Haptik der Oberfläche ist angenehm und die Oberfläche ist nahezu beliebig strukturierbar bzw. gestaltbar. Der Einsatz von Polyurethandispersion ist gering und damit ist der Formatzuschnitt kostengünstig herstellbar.

Das Trägermaterial auf Vliesbasis kann bereits eine geringe Menge an Polyurethan zu seiner Verfestigung enthalten. Dieses Polyurethan besitzt aber eine schwammige Struktur und ist daher sehr leicht. Dieser Polyurethangehalt ist ausgesprochen gering anzusetzen und liegt bei einer Trägerstärke von 0,9 mm unter 70 g/m².

In der Praxis kann der gesamte Polyurethangehalt des Formatzuschnittes ohne weiteres festgestellt werden und zwar durch Herauslösen des Polyurethanes mit Dimethylformamid und entsprechendes Wägen des Formatzuschnittes vor und nach dem Herauslösen des Polyurethans.

Das gewählte Flächengewicht des textilen Trägermaterials gewährleistet eine strapazierbare, jedoch einfach und kostengünstig herstellbare Basis und kann mit der Beschichtung gut verbunden werden. Eventuelle andere polymere Dispersionsbeimischungen, wie z.B. Polyacrylate oder Harze, werden mit herausgelöst und zählen dabei wie Polyurethan.

Die, insbesondere in Form eines Films aufgebrachte, Beschichtung besitzt ein Flächengewicht von 60 g/m² bis 240 g/m², für besondere Fälle ein Flächengewicht von 60 g/m² bis 160 g/m². Inklusive der im Trägermaterial eingelagerten Kleberschicht und des allenfalls im Trägerkörper während seiner Herstellung eingebrachten Polyurethans ist die Menge ausreichend, um die Struktur des Trägermaterials derart abzudecken, dass diese Struktur für den Betrachter wertvoll wirkt bzw. die auf der Oberfläche der Beschichtung ausgebildete Struktur auch bei Dehnung nicht störend beeinflusst, und dass selbst feinste textile Faserstrukturen, wie z.B. von Kohlenstoffgewebe, exakt wiedergegeben werden.

Um die Haftfähigkeit der Beschichtung zu erhöhen bzw. die Haptik des Formatzuschnittes zu verbessern, kann vorgesehen sein, dass die eingesetzten Vliese oder Gewirke oder Gewebe getampelt bzw. sehr leicht aufgeraut sind und gegebenenfalls mit einer Körnung > 400, insbesondere mit einer Körnung von 450 bis 900, geschliffen vorliegen, um Knoten und Erhebungen, welche sich auf der Oberfläche der Beschichtung abzeichnen könnten, zu eliminieren.

Für die Festigkeit des textilen Trägers und die Haltbarkeit der aufgebrachten Beschichtung ist es von Vorteil, wenn als Trägermaterial dichte, das heißt mit freiem Auge betrachtet, nicht oder kaum durchsichtige und/oder nicht oder kaum durchscheinende Gewirke oder Vliese oder Gewebe oder ein Verbund aus Gewirke/Vlies oder Gewebe/Vlies eingesetzt sind.

Es zeigte sich, dass es von besonderem Vorteil ist, wenn das Gewirke oder Gewebe aus Baumwolle besteht oder zumindest Baumwollfäden enthält, und wenn die Beschichtungsseite einen sehr leichten Flauscheffekt aufweist, der durch Walken oder Schleifen entstanden ist. Die besten Resultate sowohl bei der Herstellung, aber vor allem an fertigen Formatzuschnitten werden erreicht, wenn das Baumwollgewirke oder -gewebe ein Flächengewicht zwischen 100 und 200 g/m² aufweist und das Vlies, mit dem es verbunden wird, ebenfalls ein Flächengewicht zwischen 100 und 200 g/m² aufweist. Insbesondere dann, wenn ein derartiges Vlies aus Polyester- oder Polyamidfasern besteht, können diese Fasern vorteilhaft eine Stärke zwischen 2 und 6 Denier aufweisen.

Die Baumwolle nimmt das Wasser der Polyurethandispersion rasch auf und führt es an die nicht saugfähigen synthetischen Fasern weiter. Dadurch wird der Fertigungsprozess vereinfacht und Energie für die Trocknung eingespart. Der Hauptvorteil in diesem Kombinations-Verbund besteht aber darin, dass beim Verkleben der sehr leicht flauschige Oberfläche des Gewirkes oder Gewebes mit der Schicht 4' die feinsten Strukturen, welche von der Matrize auf die Beschichtungsoberfläche übertragen wurden, absolut exakt auch bei Dehnung erhalten bleiben. Dieser Vorteil entsteht dadurch, dass die feinen kurzen Flauschfasern in der Schicht 4" bzw. in der Klebeschicht 7 waagrecht bzw. parallel zu den Oberflächen angeordnet sind und Unebenheiten und Trägerstrukturen eliminieren, vor allem dann, wenn der Träger 2 in die nasse Schicht 4" eingelegt und leicht angedrückt wird. Die Vliese mit einer Faserstärke im Denierbereich weisen eine dreidimensionale Lage der Fasern auf. Die Fasern sind entweder mittels Wasserstrahl oder vorzugsweise durch Nadeln miteinander verfestigt und gegebenenfalls thermisch geschrumpft. In diesem Falle ist es wichtig, dass sie weich und voluminös sind und bei einem Gewicht zwischen 100 und 200 g/m² eine Stärke zwischen 0,8 bis 1,8 mm aufweisen. Das Baumwollgewirke oder -gewebe kann mit dem Vlies entweder verklebt sein; vorzugsweise wird es bei der Vliesherstellung gleich mittels Nadeln auf einer Seite mit diesem verbunden. So ein Verbund ist haltbar und preiswert und es werden keine weiteren Klebstoffe benötigt. Dieser Verbund besitzt eine extrem hohe Weiterreißfestigkeit, was für die vorgesehenen Einsatzgebiete des Formatzuschnittes wichtig ist.

Um den Formatzuschnitt an unterschiedliche Einsatzzwecke anpassen zu können, kann vorgesehen sein, dass an dem Trägermaterial auf seiner der Beschichtung abgewendeten Fläche zumindest eine weitere Schicht aus einem leichten, voluminösen, vorzugsweise 3 bis 6 mm starken, Polyester- oder Polyamidvlies mit einem geschäumten Kunststoffdispersionskleber angeklebt oder aufkaschiert ist. Es kann für diesen Zweck auch vorgesehen sein, dass die weitere Schicht von einem Verbund eines Nadelvlieses oder Polyester- bzw. Polyamidvlieses oder einer Schicht eines Polyurethan-Schälschaumes oder eines Chloropren-Polymerisat-Schaumes mit einem Gewirke gebildet ist, welcher Verbund an der Rückseite des, vorzugsweise von einem Gewirke gebildeten, Trägermaterials angebunden ist.

Von Vorteil kann es dabei sein, wenn der Polyurethan-Schälschaum oder das Polychloropren eine Dichte von 0,005 bis 1,2 g/cm³, vorzugsweise 0,01 bis 0,06 g/cm³ besitzt und/oder wenn das Nadelvlies ein Flächengewicht von 100 bis 200 g/m², vorzugsweise 120 bis 160 g/m², und eine mittlere Dicke von 2 bis 4 mm, vorzugsweise 2,5 bis 3,5 mm, besitzt und/oder wenn das die Rückseite ausbildende Gewirke ein Flächengewicht von 60 bis 160 g/m², vorzugsweise 80 bis 120 g/m², insbesondere von 80 bis 100g/m², besitzt.

Der Polyurethanschälschaum und der Poychlorchloroprenschaum können mit gleicher Wirkung einander substituieren. Insbesondere können derartige Formatzuschnitte für die Erstellung von Polsterungen eingesetzt werden, da damit ein nachgiebiger und weicher bzw. schlagdämpfender Formatzuschnitt erstellt werden kann, wie er beispielsweise bei Kraftfahrzeugpolsterungen, insbesondere bei Fahrzeughimmel, eingesetzt werden kann, und der im Gegensatz zu voluminösen Polymerschäumen eine sehr geringe Kohlenstoffgesamtemission aufweist.

Im Trägermaterial liegen maximal 30 Gew.-%, vorzugsweise maximal 20 Gew.-%, der Gesamtmenge der im Formatzuschnitt enthaltenen verfestigten Polyurethandispersion vor und die Bereiche des Trägermaterials, in die die Polyurethandispersion bei ihrem Auftragen kontrolliert eingedrungen sind, besitzen eine Dichte, welche zwischen 15 % und 55 % über der Dichte der polyurethandispersionsfreien Bereiche des Trägermaterials liegt, sodass sich insgesamt gesehen ein guter Verbund mit geringem Gewicht ergibt.

Der Aufbau des Formatzuschnittes sieht vor, dass die Beschichtung mit zwei untrennbar miteinander verbundenen Schichten aufgebaut ist und eine oberflächlich gelegene, oberflächlich strukturierte Schicht aus Polyurethandispersion und eine darunter liegende und damit verbundene, mit einer eine lineare Struktur besitzenden, gegebenenfalls Polyacrylate und/oder Kunstharze enthaltenden, Polyurethandispersion gebildete Schicht umfasst, wobei auf der Oberfläche des Trägermaterials eine mit Polyurethan gebildete Kleberschicht vorgesehen ist, welche Kleberschicht zwischen 0,02 und 0,6 mm, vorzugsweise zwischen 0,05 bis 0,4 mm, in die

Trägerschicht eingelagert ist und die Dichte der Trägerschicht in diesem Bereich um 15 bis 55 Gew.-% gegenüber den restlichen Bereichen der Trägerschicht erhöht. Damit wird eine gut haltbare Beschichtung erreicht, die sich in den Fasern bzw. Hohlräumen des Trägermaterials gut verankern kann. Eine gut haltende Kleberschicht ergibt sich dadurch, dass die Kleberschicht mit einer mit einem Flächengewicht von 20 bis 80 g/m² aufweisenden, gegebenenfalls Polyacrylate und/oder Harze enthaltenden, Schicht einer Polyurethandispersion gebildet ist und gegebenenfalls denselben chemischen Aufbau wie die mit dem Trägermaterial zu verbindende Polyurethandispersionsschicht besitzt.

Die Erhöhung der Dichte der Trägerschicht im Eindringungsbereich der Polyurethanklebstoffdispersion um 15 bis 55 Gew.-%, vorzugsweise 20 bis 35 Gew.-%, gewährleistet vor allem bei aus Gewirken hergestellten Trägerschichten neben einer guten Verbindung mit der Kleberschicht, dass sich auch bei starker Dehnung in beide Richtungen bzw. um senkrecht zueinander stehende Richtungen um z.B. 15 % die textile Struktur des Gewirkes auf der Oberfläche der dünnen weichen Beschichtung nicht störend sichtbar wird und selbst die sehr feinen Strukturen, z.B. von Kohlenstofffasern, nicht verzerrt werden. Das kontrollierte Eindringen der Polyurethankleberdispersion zwischen 0,02 bis 0,6 mm, vorzugsweise zwischen 0,05 bis 0,4 mm, in die Trägerschicht wird beim Auftragen der Dispersion auf die Oberseite der Trägerschicht durch einen leichten Druck gesteuert z.B. mittels einer Auftragswalze, wobei der Spalt zwischen den Walzen, um die gewünschte Eindringtiefe enger ist als die Stärke von Trägermaterial und Kleberschicht. Auch kann mittels eines entsprechend aufgebrachten Flächen- oder Walzensiebdruckes, vorzugsweise aber durch Airless-Aufsprühen mit einem Leitungsdruck von mehr als 60 bar, eine entsprechend in das Trägermaterial eingebrachte Kleberschicht ausgebildet werden. Besonders weiche Beschichtungen werden erzielt, wenn diese Kleberdispersion bzw. diese die Dichte erhöhende Polyurethandispersion als sogenannter Schlagschaum mit einer Dichte zwischen 0,75 und 0,95 g/cm³ eingesetzt wird.

Bevorzugt wird die Polyurethandispersion der Kleberschicht kontrolliert aufgebracht bzw. es erfolgt ein kontrolliertes Eindringen der Dispersion bzw. der Kleberschicht in die Trägerschicht vor allem bei sehr weichen textilen Trägern, wie polyurethanfreien Vliesen oder dünnen, offenmaschigen Gewirken oder dünnen offenmaschigen Geweben, welche mit einem dickeren Vlies verbunden sind. Dabei wird in der Matrix auf die dort aufgebrachte, weitgehend trockene erste Schicht, die zweite Schicht direkt aufgesprüht und sodann das Trägermaterial auf diese noch nasse zweite Kleberschicht aufgelegt und leicht angedrückt. Dabei lässt sich die Eindringtiefe der Dispersion dieser Schicht in die Trägerschicht leicht kontrollieren bzw. einstellen und zwar über die aufgesprühte Dispersionsmenge, ihre Viskosität und den gewählten leichten Anpressdruck nach dem Auf- bzw. Einlegen des Trägers in die nasse Dispersion. Dabei ist es erfindungsgemäß von großem Vorteil, wenn die nasse Kleberdispersion durch die offenen Maschen des dünnen, leichten Gewirkes oder Gewebes hindurch in die Oberfläche des Vlieses eindringt, sodass das Gewirke oder Gewebe in der verfestigten Dispersion eingebettet vorliegt. Dieser Gesamtbeschichtungsaufbau, bei dem alle Polyurethanschichten direkt auf die Matrize aufgebracht werden, führt dazu, dass der Formatzuschnitt homogener wird und weitgehend wasserdicht ist.

Erfindungsgemäß wird eine noch bessere Verbindung erzielt, wenn das Polyestergewirke oder -gewebe oder das Polyamidgewirke oder -gewebe zwischen 10 und 45 Gew.-%, vorzugsweise zwischen 20 und 30 Gew.-%, Baumwollfäden enthält. Eine derartige Mischung bietet beim Verarbeiten auch noch den Vorteil, dass die Baumwollfäden einen Teil des Wassers der Dispersion rasch aufnehmen und dass dadurch die Kleberdispersion in bzw. auf der Trägerschicht schneller trocknet.

Eine ansehnliche Oberfläche kann dem Formatzuschnitt verliehen werden, wenn auf der Außenfläche der Beschichtung eine Struktur ausgebildet ist, wobei die strukturierte Beschichtung vor allem das Aussehen von feinstrukturierten Textiloberflächen und/oder ein nubukartiges Aussehen zeigt. Auch das Aussehen von geschliffenem Gummi, Schleifpapier oder Waffelmustern oder von einem technischen Gewebe, wie z.B. einem Gewebe oder Gewirke aus Glas- oder Kohlenstofffasern, oder ein technisches Aussehen oder ein narbenlederartiges Aussehen kann vorgesehen werden.

Zum Schutz kann vorgesehen sein, dass auf die Oberfläche der Beschichtung eine sehr dünne, hydrophobe Finish-Schicht in einer Stärke von weniger als 0,005 mm mit Nanoteilchen aus Polysiloxan oder aus Wachs oder aus Fluorpolymeren oder aus Mischungen von diesen aufgebracht ist.

Ein kostengünstiger und umweltfreundlicher Aufbau des Formatzuschnittes, z.B. für Autohimmel, wird erreicht, wenn ein voluminöses, leichtes bis zu 6 mm dickes Polyestervlies, das aus PET-Flaschen-Regenerat gebildete Fäden bzw. Fasern enthält, auf der Rückseite der Trägerschicht mittels eines geschäumten Dispersionsklebers angebracht wird.

Die Aufbringung der Beschichtung auf einen flächigen, schicht- bzw. plattenförmigen Zuschnitt eines Trägermateriales erfolgt derart, dass die Beschichtung mit bzw. auf einer negativ strukturierten Unterlage bzw. Form aus Silikonkautschuk durch Verfestigung einer Polyurethan enthaltenden Dispersion gebildet wird, auf welche eine Polyurethan enthaltende Dispersionsschicht aufgetragen wird. Diese Dispersionsschicht wird nach ihrer Verfestigung auf der Silikonunterlage mit der auf die Trägerschicht aufgebrachten Kleberschicht, welche vorzugsweise chemisch identisch oder sehr ähnlich ist und geschäumt sein kann, vorzugsweise mittels Wärme und/oder Druck, verklebt. Die Außenfläche der Beschichtung wird von der Matrize erstellt bzw. strukturiert. Die Verbindung der Beschichtung mit der Kleberschicht erfolgt derart, dass die auf das Trägermaterial aufgebrachte, noch feuchte Kleberschicht auf die Beschichtung aufgelegt und die Schichten bei einem Druck von weniger als 0,3 kg/cm², vorzugsweise weniger als 0,15 kg/cm², bzw. weitgehend druckfrei und bei einer Temperatur von weniger als 80 °C, vorzugsweise weniger als 65 °C, verbunden werden.

Alternativ und bevorzugt kann die zweite Schicht, das heißt die Kleberschicht, nicht auf den textilen Träger, das heißt die textile Trägerschicht, sondern direkt auf die verfestigte erste Schicht der Beschichtung aufgetragen und der Träger in diese nasse Schicht ein- bzw. aufgelegt, leicht angedrückt und mittels Wärme getrocknet und verklebt werden.

Ein derartiger Formatschnitt ist vorteilhafter Weise derart gestaltet, dass bei einer Gesamtdicke von 0,9 bis 1,5mm das Flächengesamtgewicht des Formatzuschnittes zwischen 250 und 500 g/m², insbesondere zwischen 350 und 450 g/m², liegt.

Eine angenehme Haptik ergibt sich dadurch, dass die Beschichtung mit einer Polyurethandispersion erstellt ist, die eine Härte von weniger als 68 Shore A, vorzugsweise von weniger als 55 Shore A, besitzt.

Das Trägermaterial besitzt die entsprechende Leichtigkeit, ein größeres Volumen, eine bessere Haptik und einen weicheren Griff, wenn auf seiner Rückseite eine flauschige Faserstruktur ausgebildet ist. Die Garne des Gewirkes oder Gewebes bestehen aus Polyester oder Polyamid und können auch bis zu 40 Gew.-% Baumwolle enthalten oder nur mit Baumwollfäden gebildet sein. Vliese aus Polyester- oder Polyamidfasern besitzen bei gleicher Stärke gegenüber vergleichbaren Gewirken oder Geweben ein um mehr als 20 % geringeres Flächengewicht und haben dabei einen höheren Widerstand gegen Weiterreißen und ein günstigeres Dehnungsverhalten. Vor allem die teuren Mikrofaservliese mit einer schwammartigen Polyurethanimprägnierung führen bereits bei einem Flächengewicht von 240 g/m² und beschichtet nach der erfindungsgemäßen Vorgangsweise zu optimalen Formatzuschnitten mit einer Stärke von 1,1 mm und einem Gesamtflächengewicht von 310 g/m². Diese Vliese sind mit einer Faserstärke von ca. 0,7 dtex gebildet.

Erfindungsgemäß können aber auch aus den sehr preiswerten Vliesen aus Polyester- oder Polyamidfasern mit einer Faserstärke zwischen 1 und 9 Denier, vorzugsweise 2 bis 4 Denier, Formatzuschnitte hergestellt werden, welche denen aus Mikrofasern sehr nahe kommen und bezüglich ihres geringen Gewichts diesen sogar überlegen sind. Insbesondere gute Resultate werden in Hinblick auf eine sehr exakte Oberflächenstrukturwiedergabe erreicht, die sich auch beim Dehnen um 15 % nicht verändert und bei der sogar die feinsten Faserstrukturen eines abgeformten Kohlenstoffgewebes in der dünnen Beschichtung dreidimensional kohlenstofffasertypisch unverfälscht bleiben. Dies wird dadurch erreicht, dass zwischen der Beschichtung und dem Vlies ein dünnes, leichtes, offenmaschiges Gewirke oder Gewebe aus Polyester oder Polyamid in die Kleber- bzw. Polyurethanschicht eingebettet ist.

Die gute Haltbarkeit und Widerstandsfähigkeit der Beschichtung werden dadurch erreicht, dass die strukturierte Oberschicht der Beschichtung mit einer verfestigten Polyurethandispersionsmischung erstellt ist, die zwischen 2 und 10 Gew.-% nicht emigrierbares Polysiloxan enthält und vernetzt ist. Die im Formatzuschnitt unten liegende Schicht der Beschichtung, sowie die Kleberschicht, die mit dem Trägermaterial verbunden ist, kann jeweils zu 50 bis 85 Gew.-% mit kristalline Struktur besitzendem Polyurethan aufgebaut sein. Die Kleberschicht auf der Oberfläche des Trägermaterials ist 0,02 bis 0,6 mm, insbesondere 0,05 bis 0,4 mm, tief in das saugfähige Material des Vliesmaterials, gegebenenfalls durch ein maschiges Gewirke oder Gewebe hindurch von der Oberfläche der Trägerschicht her eingelagert bzw. eingezogen.

Erfindungsgemäß ist es, dass alle Schichten einen Vernetzer enthalten und diese Schichten zu einem Zeitpunkt zusammengebracht bzw. aufeinander gelegt werden, bevor der Vernetzer wirksam wird, sodass die Vernetzung in allen Schichten zeitgleich abläuft. Damit werden die Schichten in sich sowie die Schichten miteinander vernetzt bzw. kommt es nicht nur zu einem parallelen Vernetzen der einzelnen Schichten sondern auch zu einem schichtübergreifenden Quervernetzen. Beim Erstellen des Formatzuschnittes wird somit auf die auf das Trägermaterial eingezogene Kleberschicht, die mit der Oberflächenschicht verbundene Kleberschicht aufgebracht, sodass die beiden Kleberschichten aneinander anhaften. Dazu trägt auch bei, wenn die Beschichtung und/oder die Kleberschicht jeweils bis zu 50 Gew.-%, vorzugsweise bis zu 25 Gew.-%, Polyacrylate bezogen auf den Polyurhananteil der Dispersion enthält.

Für eine gute Verbindung ist es zweckmäßig, wenn die Dicke der Beschichtung umfassend die Oberflächenschicht und die daran anhaftenden Schicht 0,05 bis 0,16 mm beträgt.

Die Kleberschicht ist mit einem Gewicht von 20 bis 80 g/m² von der Oberfläche her in bzw. auf das Trägermaterial ein- bzw. aufgebracht und zumindest zum Teil in dieses eingelagert.

Letztlich betrifft die Erfindung auch mit einem erfindungsgemäßen Formatzuschnitt hergestellte Gegenstände, insbesondere in Form von Kraftfahrzeuginnenwandverkleidungen z.B. Autohimmel und -polsterungen, Taschen, Koffern, Möbelbezügen, Bekleidungsstücken, Schuhen, Fahrrad- oder Motorradsätteln oder Kartentaschen. Es ist vorteilhaft die erfindungsgemäßen Formatzuschnitte zur Herstellung dieser Gegenstände zu verwenden.

Im Folgenden wird die Erfindung anhand der Zeichnung beispielsweise näher erläutert, in der in Fig. 1 und 2 ein schematischer Schnitt durch den Aufbau eines erfindungsgemäßen Formatzuschnittes dargestellt ist. Fig. 3 zeigt eine Draufsicht auf die Oberfläche eines erfindungsgemäßen Formatzuschnittes. Fig. 4 zeigt eine vorteilhafte Ausführungsform eines erfindungsgemäßen Formatzuschnittes. Fig. 5 zeigt einen Formatzuschnitt, bei dem das Trägermaterial mit einer weiteren Schicht verbunden ist.

Der erfindungsgemäße Formatzuschnitt weist eine Schicht mit textilem Trägermaterial 2 auf, das ein Vlies und/oder ein Gewirke oder ein Gewebe aus Kunststofffasern, insbesondere Polyesterfasern, umfasst. Auf einem Vlies kann sich beispielsweise auch ein hier nicht dargestelltes, dünnes, offen- bzw. weitmaschiges Gewirke oder Gewebe befinden, das mit synthetischen Fäden oder Baumwollfäden aufgebaut ist.

Für besonders weiche und starke Endprodukte werden Vliese eingesetzt mit einer Faserstärke zwischen 0,7 dtex und 9 Denier.

Die eingesetzten Gewirke oder Gewebe können getampelt und/oder auf ihrer Beschichtungsseite leicht flauschig geschliffen sein, insbesondere mit einer Körnung > 400, vorzugsweise mit einer Körnung von 450 bis 900, geschliffen, vorliegen, und besitzen auf ihrer Rückseite vorzugsweise eine ausgeprägte flauschige Struktur.

Auf die Schicht aus Trägermaterial 2 ist eine Kleberschicht 7 direkt oder indirekt aufgebracht bzw. ist diese Kleberschicht 7 zum Grossteil in die Schicht des Trägermaterials 2 eingezogen. Auf diese Kleberschicht 7 ist eine Beschichtung 4 aufgebracht, welche zwei Schichten umfasst und zwar eine strukturierte, oberflächlich liegende Oberflächenschicht 4' und eine unterhalb dieser Schicht 4' liegende zum Verkleben verwendete Schicht 4". Die Beschichtung 4 ist derart auf die Kleberschicht 7 aufgebracht, dass die klebende Schicht 4" auf der Kleberschicht 7 zu liegen kommt und diese beiden Schichten 4", 7 miteinander unlösbar verbunden werden. Auf die Außenseite der oben liegenden Schicht 4' der Beschichtung 4 kann eine Finishschicht 5 aufgebracht werden.

Die Beschichtung 4 inklusive des im Trägermaterial 2 und allenfalls in der Kleberschicht 7 enthaltenen Polyurethans enthalten keine Lösungsmittel, ebenso wenig wie das Trägermaterial. Der Formatzuschnitt ist also weiterstgehend frei von kohlenstoffhältigen Emissionen und wurde auch umweltfreundlich hergestellt, dies auch bei einem sehr niedrigen Wasserverbrauch..

Der gesamte Polyurethangehalt des Formatzuschnittes 1 beträgt 60 bis 240 g/m², vorzugsweise 80 bis 150 g/m², insbesondere 100 bis 140 g/m². Dieses angebebene Flächengewicht umfasst auch allenfalls bereits im Trägermaterial 2 vorliegendes Polyurethan bzw. vorliegende Polyurethandispersion, die im Zuge des Herstellungsverfahrens des Trägermaterials 2 bereits in dieses eingebracht wurde.

Es ergibt sich erfindungsgemäß eine Flächengewicht für den Formatzuschnitt, umfassend die Beschichtung 4 und das Trägermaterial 2, von 250 g/m² bis 500 g/m², vorzugsweise 350 g/m² bis 450 g/m².

Es ergibt sich damit eine gute Verbindung zwischen der Beschichtung 4 und dem Trägermaterial 2. Insgesamt ist jedoch vorgesehen, dass im Trägermaterial 2 maximal 20 bis 80 g/m² Polyurethandispersion enthalten sind, wobei dieser Gehalt sowohl das bereits bei der Herstellung des Trägermaterial 2 gegebenenfalls eingebrachte Polyurethan als auch die beim Aufbringen der Beschichtung 4 in den Bereich 3 eingedrungene Polyurethandispersion umfasst.

Auf die Oberfläche der Beschichtung 4 kann eine sehr dünne hydrophobe Finishschicht 5 in einer Stärke von weniger als 0,005 mm mit Nanoteilchen aus Polysiloxan oder aus Wachs oder aus Fluorpolymeren oder aus Mischungen von diesen aufgebracht werden.

Die Beschichtung 4 ist mit den untrennbar miteinander verbundenen Schichten 4' und 4" aufgebaut und umfasst die oberflächlich gelegene, strukturierte Schicht 4' aus Polyurethandispersion und die darunter liegende und damit verbundene, mit einer eine lineare Struktur besitzenden, gegebenenfalls Polyacrylate und/oder Kunstharze enthaltenden, Polyurethandispersion gebildete Schicht 4". Diese Polyurethandispersionsschicht 4" wird mit der auf dem Trägermaterial 2 ausgebildeten, mit Polyurethan gebildeten Kleberschicht 7 solange diese Schicht(en) noch feucht oder nass ist bzw. sind verbunden. Es ist vorgesehen, dass die Beschichtung 4 mit einer negativ strukturierten Unterlage bzw. Form aus Silikonkautschuk durch Verfestigung einer Polyurethan enthaltenden Dispersion gebildet ist, die an die Oberfläche des Trägermaterials 2 bzw. die Kleberschicht 7 angebunden bzw. mit dieser verklebt wird. Die Beschichtung 4 wird mit dieser Matrize erstellt bzw. strukturiert und in noch feuchtem Zustand, insbesondere weitgehend druckfrei und unter nur geringer Temperaturerhöhung, aufgebracht.

Die Schicht 4' der Beschichtung 4 wird vorab mit einer Polyurethandispersion auf einer erwärmten bzw. heißen Silikonunterlage ausgebildet bzw. geformt und durch Trocknung verfestigt; darauf wird die Schicht 4" aufgebracht, die chemisch ident oder sehr ähnlich aufgebaut ist. Die Schicht 4" wird mit der weichen Kleberschicht 7, die ebenfalls chemisch ident oder sehr ähnlich mit der Beschichtung 4 ist, fest verbunden.

Es ist vorgesehen, dass bei einer bevorzugten Endstärke von etwa 1,2 mm das Flächengewicht eines erfindungsgemäßen Formatzuschnittes zwischen 320 und 485 g/m² beträgt.

Da die Fasern des Trägermaterials 2 vorzugsweise aus Polester bestehen, werden die Anforderungen der Fahrzeugindustrie, insbesondere hinsichtlich der Emission organischer Verbindungen, nicht nur erfüllt sondern beträchtlich unterschritten. Der erfindungsgemäße Zuschnitt besitzt eine günstige CO₂-Bilanz.

Des weiteren besitzt ein derartiger Formatzuschnitt in zueinander senkrechten Flächenrichtungen eine Bruchdehnung von mehr als 20 %, vorzugsweise von mehr als 40 %, bzw. ist bei 15 % Dehnung keine störende Veränderung der Oberfläche festzustellen.

Um dickere Formatzuschnitte 1 erstellen zu können, kann auf die beschichtungsfreie Seite bzw. Rückseite des Trägermaterials 2 eine weitere Schicht 6 aufgebracht werden, die von einem Vlies gebildet ist. Auch das Aufbringen von mehreren Schichten 6 ist möglich. Eine derartige Anordnung wirkt stoßdämpfend bzw. besitzt hervorragende schalldämmende und sicherheitstechnische Eigenschaften. Da die Fasern aus PET-Flaschen regeneriert bzw. recycelt werden können, ist die Erstellung derartiger Vliese wirtschaftlich und umweltfreundlich.

Beim direkten oder indirekten Aufbringen der Kleberschicht 7 dringt ein Teil dieser Dispersion kontrolliert in das Trägermaterial 2 in den Bereich 3 ein, der etwa 0,02 bis 0,6 mm, vorzugsweise 0,05 bis 0,4 mm, dick ist. Dabei bildet sich auf der Oberfläche des Trägermaterials, wenn die Kleberdispersion direkt auf diese aufgebracht wurde, ein dünner, zerrissener Klebefilm von weniger als 0,02 mm Dicke aus. Wenn die Kleberdispersion indirekt, das heißt, wenn die Trägerschicht in die nasse Dispersion eingelegt wird, bildet sich ein weitgehend homogener Film auf der Trägeroberfläche aus. In dem Bereich 3, wo die Dispersion eingedrungen ist, weist das Trägermaterial 2 nach dem Trocknen der Dispersion eine Dichte auf, welche zwischen 15 und 55 % über der Dichte des Bereiches des Trägermaterials 2 liegt, in den keine Polyurethandispersion eingedrungen ist. Durch das direkte oder indirekte Aufbringen der Kleberdispersion auf die Trägerschicht kann die Wasserdichtigkeit und die Wasserdampfdurchlässigkeit beeinflusst bzw. gesteuert werden.

Bei einer bevorzugten Endstärke des Formatzuschnittes 1 von 1 mm weist dieser ein Gewicht zwischen 290 und 385 g/m² auf. Die Stärke bzw. Dicke wurde gemessen in Anlehnung an DIN 53326 mit einem Stempeldurchmesser von 25 mm und einen Federdruck von 5 N.

Je feiner die Fasern sind, die die Garne ausbilden, umso mehr Fasern werden benötigt und umso größer wird die Oberfläche des Garns bzw. der eingesetzten Mikrofasern für das Vlies und umso besser wird die Verbindung der Polyurethandispersion mit dem Garn bzw. mit den Mikrofasern des Vlieses.

Die Formatzuschnitte werden insbesondere derart hergestellt, dass das Trägermaterial 2 in Form von Bahnware zur Verfügung gestellt wird und entsprechende Zuschnitte, beispielsweise in einer Länge von zwei Metern und einer Breite von 1,5 Metern, geschnitten werden und auf diese flächigen bzw. plattenförmigen Trägermaterialien die Beschichtung 4 aufgebracht wird. Diese Beschichtung 4 wird von der bzw. direkt mit der Silikonkautschukmatrize auf das plattenförmige Trägermaterial 2 übertragen.

Die beschichtete Oberfläche 4 eines Formatzuschnittes 2 kann in unterschiedlichen Flächenbereichen unterschiedliches Aussehen und unterschiedliche Funktion aufweisen. So könnte z.B. ein Teilbereich des Formatzuschnittes das Aussehen und die Eigenschaften eines Kohlenstofffasergewebes aufweisen und über eine nur geringe Wasserdampfdurchlässigkeit verfügen, wogegen ein anderer Teilbereich des Formatzuschnittes ein nubuklederähnliches Aussehen und eine wesentlich höhere Wasserdampfdurchlässigkeit aufweist.

Es ist wichtig und von besonderem Vorteil, dass die beiden Schichten 4', 4" der Beschichtung 4 auf der Matrize gefertigt werden. Der an diese Beschichtung 4 anzubindende bzw. damit zu verklebende Teil des Trägermaterials 2 ist die auf das Trägermaterial 2 direkt oder indirekt aufgebrachte bzw. dort eingezogene Kleberschicht 7. Ein Teil bzw. der Großteil dieser Kleberschicht 7 ist kontrolliert zur Erhöhung der Dichte des Trägermaterials 2 in dieses im Bereich 3 definiert eingelagert. Durch diesen Aufbau werden die gestellten Aufgaben optimal gelöst. Es kann erfindungsgemäß vorgesehen sein, dass zur weiteren Verbesserung der Klebstoff der Kleberschicht 7, welcher die Dichte des Trägermaterials 2 im Bereich 3 längs seiner Eindringtiefe verändert, aufgeschäumt ist, und als sogenannter Schlagschaum mit einer entsprechenden Menge von eingebrachter Luft eingelagert ist.

Die eingebrachte Kleberschicht 7 bzw. die in das Trägermaterial 2 eingebrachte Dispersion dieser Schicht haben eine Doppelfunktion. Die Kleberschicht 7 dient zur Dichteerhöhung des Trägermaterials 2, ohne die Hohlräume bzw. Zwischenräume der Garnmassen bzw. der Fasern oder der Zellen einer allenfalls im Trägermaterial 2 bereits vorhandenen Schwammstruktur auszufüllen, vermeidet aber auch ein Verschließen von vorhandenen Zwischenräumen und ein daraus resultierendes höheres Gesamtgewicht. Darüber hinaus besitzt sie beste Klebeeigenschaften.

Um eine optimale Vernetzung zwischen den einzelnen Schichten zu erreichen, ist es von Vorteil, wenn die erste Schicht 4', die auf der strukturierten Matrize erstellt wird, noch 0,2 bis 4 Gew.-% Wasser enthält, vorzugsweise einen Wassergehalt von 1 bis 3 Gew.-%, bezogen auf den Feststoffanteil der Polyurethandispersion, besitzt. Darauf wird zur Ausbildung der klebenden Schicht 4" die Dispersion nass aufgetragen. Diese aufgetragene Dispersion wird getrocknet und enthält noch zwischen 0,5 und 6 Gew.-% Wasser bezogen auf den Feststoffanteil der Polyurethandispersion.

Die auf das Trägermaterial 2 aufgetragene Polyurethankleberschicht 7 bzw. die dazu eingesetzte Dispersion wird feucht mit einem Wassergehalt zwischen 4 und 25 Gew.-%, bezogen auf den Feststoffanteil der Polyurethandispersion, aufgebracht und die Schichten 4" und die Kleberschicht 7 werden aneinander angelegt, z.B. durch Auflegen der Kleberschicht 7 mit dem Trägermaterial 2 auf die in der Matrize ausgebildete Beschichtung 4. Dabei werden mit geringem Druck und einer allenfalls vorgesehenen geringen Erwärmung die Schicht 4" und die Kleberschicht 7 verbunden.

Bei dieser Verbindung des Trägermaterials 2 mit seiner noch feuchten Kleberschicht 7 ist diese Kleberschicht 7 noch extrem weich und durch Druck abänderbar bzw. manipulierbar. Auch die Schichten 4' und 4" auf der Matrize sind noch nicht vernetzt und enthalten Restwasser und sind ebenfalls vor dem Vernetzen noch sehr druckempfindlich. Entsprechend kommen erfindungsgemäß Kunstharze enthaltende oder sogenannte harzmodifizierte Polyurethandispersionen zum Einsatz.

Die vor ihrer Vernetzung bei normalen oder bei Temperaturen unterhalb von 80 °C über ausgeprägte Kontaktkleber-Eigenschaften verfügenden Schichten 4" bzw. 7 sind gut miteinander verklebbar. Derartige Harzzusätze liegen in einem Bereich zwischen 2 bis 9 Gew.-% bezogen auf das Gewicht der Polyurethandispersion. Die Verwendung einer Polyurethandispersion mit kontaktkleberartigen Eigenschaften bei Raumtemperatur bzw. bei Temperaturen unterhalb von 80 °C ist wichtig, weil die Beschichtung 4 beim Verpressen bzw. Zusammenfügen der Schichten noch nicht vernetzt ist und Restwasser enthält und somit sehr druckempfindlich ist. Bei erhöhtem Drücken und bei erhöhter Klebstoffaktivierungstemperatur könnte sich die Struktur des Trägermaterials 2 auf der Beschichtungsoberfläche sehr störend abzeichnen, was jedoch durch entsprechende Verfahrensführung vermieden werden kann.

Die zur Ausbildung der Beschichtung 4 bzw. der Kleberschicht 7 eingesetzten Polyurethandispersionsmischungen könnten Zuschlagstoffe, insbesondere Pigmente, Vernetzer oder Verdicker, aufweisen. Diese Zuschlagstoffe erhöhen den Feststoffanteil der Polyurethandispersion auf 38 bis 54 Gew.-%, bezogen auf das Gewicht der Dispersion. Der Wassergehalt der eingesetzten Polyurethandispersionen liegt zwischen 46 und 62 Gew.-% der Dispersion.

Beim bevorzugten indirekten Beschichten wird die Kleberdispersion 4" auf die Trockenschicht 4' aufgetragen. Die Kleberschicht 4" in der Matrize muss beim Ein- oder Auflegen des Trägermaterials 2 noch nass sein bzw. sollte die eingesetzte Dispersion noch mehr als 75 % ihres ursprünglichen Wassergehaltes aufweisen.

Die Polyurethandispersionsmischungen für die Schicht 4' besitzen nach ihrer Trocknung und endgültigen Endvernetzung eine Härte von weniger als 68 Shore A, vorzugsweise weniger als 55 Shore A. Die Schicht 4" und die Kleberschicht 7 besitzen eine Härte von weniger als 48 Shore A, vorzugsweise zwischen 20 und 35 Shore A.

Bevorzugt kann ein Formatzuschnitt mit einer geringeren Endstärke aufgebaut sein mit einer Trägerschicht 2 aus einem Gewirke oder einem Gewebe mit einem Flächengewicht zwischen 40 und 100 g/m², welche Schicht mit einem Vlies mit einem Flächengewicht zwischen 80 und 240 g/m², vorzugsweise 110 bis 180 g/m², verbunden ist. Vorteilhafterweise liegen das Gewirke, das Gewebe und/oder das Vlies als Bahnenware vor, welche Schichten manipulationsfest miteinander verbunden sind. Die Beschichtungsseite eines derartigen Textilverbundes ist immer die Gewirke- oder Gewebe-Schicht.

Das textile Trägermaterial 2 kann gegebenenfalls mit den Textilgriff und die Weichheit verbessernden Chemikalien, wie z.B. Silikonen und/oder oberflächenspannungsbeeinflussenden Chemikalien behandelt werden. Die Trägerschicht 2 kann auch das Brandverhalten beeinflussende Chemikalien enthalten. Deren Gewichtsanteile sind bei den vorliegenden Parameterangaben betreffend die Gewichte der aufgebrachten Schichten und des Trägermaterials hinsichtlich der angegebenen Gesamtgewichte usw. nicht zu berücksichtigen.

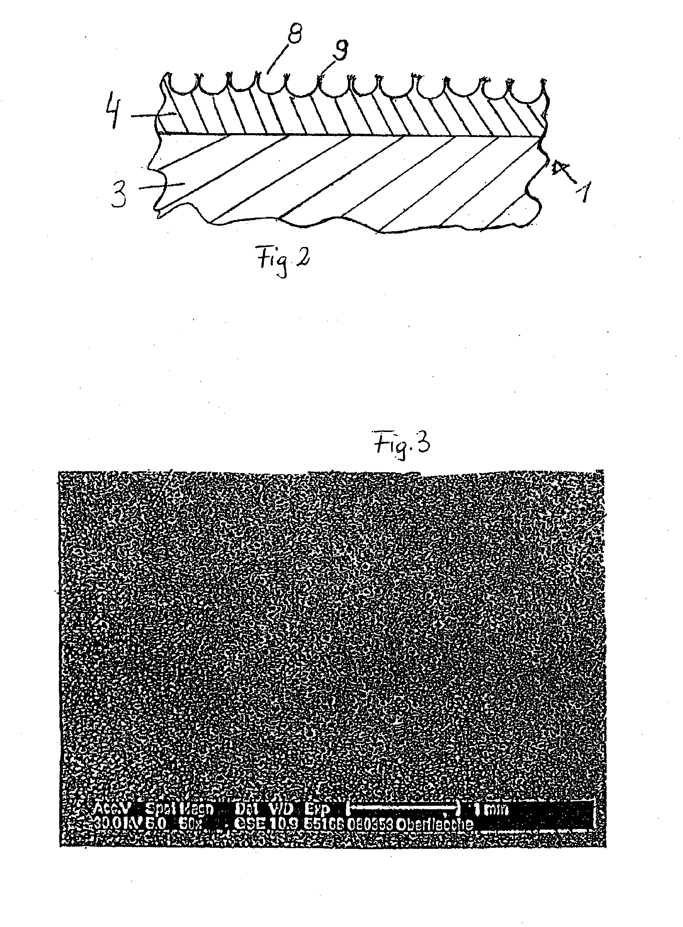

Fig. 2 zeigt einen vergrößerten Schnitt durch einen Formatzuschnitt 1 und man erkennt eine mögliche Oberflächenstruktur der Beschichtung 4, die von der Silikonmatrize abgezogen wurde. Die Oberfläche besitzt eine mit Mikrovertiefungen 8 gebildete Struktur, wobei zwischen den Mikrovertiefungen 8 Stege bzw. Flächenbereiche 9 ausgebildet sind, die eine raue bzw. matte und feinfasrige Oberfläche darstellen. Fig. 3 zeigt eine vergrößerte Draufsicht auf eine derartige Oberfläche eines erfindungsgemäßen Formatzuschnittes. Es ist ersichtlich, dass die jeweiligen in sich eine geschlossene Umrandung aufweisenden Mikrovertiefungen 8 nicht ganz regelmäßig sind und unterschiedliche gerundete aber auch allenfalls polyedrische Gestalt aufweisen können.

Die Trägerschicht 2 kann mit Geweben, Gewirken oder Vliesen aufgebaut sein. Die Trägerschicht 2 kann auch mit zwei unterschiedlichen, miteinander verbundenen Textilien, wie z.B. Gewirke-Vlies oder Gewebe-Vlies, aufgebaut sein.
die Trägerschicht 2 aus zwei miteinander verbundenen, unterschiedlichen Schichten besteht, so wird auf das dehnungsärmere textile Material bzw. Gewirke oder Gewebe die Beschichtung 4 aufgebracht und das zum Einsatz kommendes Vlies befindet sich immer auf der Unterseite bzw. der der Beschichtung 4 abgewandten Seite des Formatzuschnittes. Das Vlies ist der weichere und leichtere Teil des Trägermaterials 2. Damit wird die Haptik positiv beeinflusst und bleibende Falten bei scharfem Einknicken werden verhindert. Vor allem aber bleiben auch die feinen Oberflächenstrukturen selbst beim Dehnen um 15 % unverändert.

Zweckmäßigerweise können die Gewebe oder Gewirke der Trägerschicht 2 auf ihrer der Beschichtung 4 abgekehrten Fläche eine stark ausgeprägte flauschige Faserstruktur zeigen. Diese Ausbildung an dieser Fläche ist unterschiedlich zur Ausbildung der beschichteten Seite der Trägerschicht 2, da dort eine stark flauschige Oberfläche zu einer "schwimmenden" Beschichtung führen würde, während ein sehr leichter Flauscheffekt auf der Beschichtungsseite vor allem bei Gewirken oder Geweben aus Baumwollfäden vorteilhaft ist.

Vorteilhafterweise beträgt das Flächengewicht des Trägermaterials 2 200 g/m² bis 350 g/m². Es ist jedoch ohne weiteres möglich, Formatzuschnitte mit einem Flächengewicht von 200 g/m² bis 450 g/m² vorzusehen und auch bei diesem Flächengewicht eine gute Haptik und eine entsprechend hohe Endstärke von 1,2 bis 1,5 mm zu erzielen. Dazu kann vorteilhafterweise vorgesehen sein, dass die der Beschichtung 4 gegenüberliegende Rückseite einer mit Gewirke oder Gewebe erstellten Trägerschicht ein flauschiges samt- oder plüschähnliches Aussehen aufweist. Da dieser Faseranteil nur die Endstärke bzw. - dicke erhöht, kann es zweckmäßig sein, zur Erzielung größerer Dicke, ein Gewirke oder ein Gewebe mit einem Flächengewicht zwischen 350 und 400 g/m² einzusetzen, wobei allein das Gewicht der aus der rückseitigen Fläche herausragenden Fasern bereits bis zu 120 g/m² betragen kann. Dieser Fasergewichtsanteil trägt zwar nicht zur Reiß- und Weiterreißfestigkeit bei; er verbessert aber insgesamt wesentlich die Haptik und verhindert eine bleibende Faltenbildung bei scharfen Knicken.

Sofern das Trägermaterial mit nicht flauschigen bzw. nicht samt- oder plüschartigen Gewirken oder Geweben gebildet wird, beträgt das Flächengewicht in der Regel 200 bis 350 g/m².

Die Schichten 4', 4" werden in der Regel durch Aufsprühen der Polyurethandispersion auf die Matrize, insbesondere durch sogenannte Airless-Verfahren, aufgebracht. Die Dispersion zur Ausbildung der Kleberschicht 7 kann entweder direkt auf die nur noch feuchte, sich aber trocken anfühlende Schicht 4" mittels Airless-Verfahrens aufgesprüht werden, oder auch durch Aufgießen aufgetragen werden. Die Trägerschicht 2 wird auf bzw. in die noch nasse Dispersion der Kleberschicht 7 gelegt und leicht angedrückt. Die Dispersion für die Kleberschicht 7 kann bei einem Airless-Sprühauftrag auch leicht geschäumt vorliegen bzw. in Form eines Schlagschaums eingesetzt werden. Das Aufbringen aller Schichten 4', 4", 7 auf die Matrize ist besonders wirtschaftlich durchführbar und führt auch bei Vliesträgerschichten zu weicheren Endprodukten.

Bei Gewirke- oder Gewebeträgerschichten mit einer dichteren Faserstruktur auf Ihrer Beschichtungsseite ist es von Vorteil, die Dispersion für die Kleberschicht 7 direkt auf das textile Material aufzubringen, vorzugsweise durch Aufsprühen, insbesondere im Airless-Verfahren.

Alle Schichten 4',4" und 7 sind nass oder feucht zusammen gebracht bzw. aneinander gelegt und mit dem in ihnen enthaltenen Vernetzer verbunden bzw. vernetzt. Damit werden die Schichten 4' und 4" sowie die Kleberschicht 7 fest und dauerhaft verbunden, auch wenn die Schichten 4', 4" bzw. 7 mit unterschiedlichen Polyurethandispersionen gebildet sind.

Im Rahmen der Erfindung können die Fasern bzw. Garne unterschiedliche Farben aufweisen, das heißt die textile Trägerschicht 2 kann auch mehrfärbig ausgebildet bzw. strukturiert sein. Dies trifft insbesondere für Gewirke- und Gewebeträger zu. Die Trägerschicht 2 kann auch mit Textilfarbstoffen mehrfärbig bedruckt sein. Erfindungsgemäß könnte in diesem Fall die Beschichtung 4 transparent oder färbig transparent ausgebildet sein, womit die Farben der Trägerschicht 2 sichtbar bleiben.

Beim Verbinden eines Gewirkes oder Gewebes mit einem Vlies ist es zweckmäßig, wenn das Vlies immer um zumindest 0,3 bis 1,3 mm dicker ist als das Gewirke oder Gewebe, mit dem es zumindest manipulationsfest auf beliebige Art mechanisch oder klebetechnischverbunden ist.

Es wurden erfindungsgemäße Formatzuschnitte erstellt, die gegenüber vergleichbaren schwereren handelsüblichen Materialien eine verbesserte Haltbarkeit bei einem geringen Gewicht, eine erhöhte Abriebfestigkeit sowie eine erhöhte Reißfestigkeit besaßen und diese bekannten Materialien bezüglich Weichheit und Haptik übertrafen. Im Folgenden werden Parameter von Formatzuschnitten angegeben, die allesamt bei unterschiedlicher Gesamtstärke im Wesentlichen optimale Gebrauchseigenschaften zeigten:
1. Es wurde ein Formatzuschnitt 1 mit einem Gesamtflächengewicht von 370 g/m² erstellt, wobei das Gesamtflächengewicht der Trägerschicht 240 g/m² betrug. Die mit einem Polyestergewirke erstellte Trägerschicht 2 besaß eine flauschige Rückseite und eine Stärke von 0,85 mm. Der gesamte Polyurethangehalt hatte ein Flächengewicht von 130 g/m². Die Kleberschicht 7 besaß eine Eindringtiefe in die Trägerschicht 2 von 0,03 mm. Der Auftrag der die Kleberschicht 7 bildenden Dispersion erfolgte direkt auf die Trägerschicht 2. Die Gesamtstärke des Formatzuschnittes betrug 1,0 mm.
2. Es wurde ein Formatzuschnitt 1 mit einem Gesamtflächengewicht von 400 g/m² erstellt. Das Gesamtflächengewicht der Trägerschicht 2 betrug 290 g/m². Die Trägerschicht 2 wurde mit einem Gewebe aus Polyamid erstellt und besaß eine flauschige Rückseite bei einer Stärke von 0,9 mm. Der gesamte Polyurethangehalt betrug 110 g/m². Die Eindringtiefe der Kleberschicht 7 in die Trägerschicht 2 betrug 0,04 mm. Der Auftrag der die Kleberschicht 7 erstellenden Dispersion erfolgte direkt auf die Trägerschicht 2. Die Gesamtstärke des Formatzuschnittes 2 betrug 1,15 mm.
3. Es wurde ein Formatzuschnitt 1 mit einem Gesamtgewicht von 355 g/m² erstellt. Die Trägerschicht 2 besaß ein Gesamtflächengewicht von 215 g/m². Die Trägerschicht 2 besaß eine Dicke von 1,35 mm und wurde mit einem weitmaschigen Polyamidgewirke erstellt, das mit einem Polyamidvlies mit einer Fädenstärke von 3 Denier verstärkt wurde. Der Gesamtpolyurethangehalt des Formatzuschnittes betrug 140 g/m². Die Eindringtiefe der Kleberschicht 7 in die Trägerschicht betrug 0,08 mm. Der Auftrag der Dispersion der Kleberschicht 7 auf die Trägerschicht 2 erfolgte indirekt, das heißt, die Trägerschicht 2 wurde auf die in der Matrize befindliche Kleberschicht 7 aufgelegt. Die Gesamtstärke des Formatzuschnittes betrug 1,35 mm.
4. Es wurde ein Formatzuschnitt 1 mit einem Gesamtflächengewicht von 330 g/m² erstellt. Das Gesamtflächengewicht der Trägerschicht 2 betrug 235 g/m². Die Dicke der Trägerschicht 2 betrug 1,70 mm und wurde mit einem Polyestervlies mit Fäden einer Stärke von 3 Denier erstellt. Der gesamte Polyurethangehalt des Formatzuschnittes betrug 95 g/m². Die Eindringtiefe der Kleberschicht 7 in die Trägerschicht 2 betrug 0,04 mm. Die Dispersion der Kleberschicht 7 wurde indirekt auf die Trägerschicht 2 aufgebracht. Der Formatzuschnitt besitzt eine Gesamtstärke von 1,80 mm.
5. Es wurde ein Formatzuschnitt 1 mit einem Gesamtflächengewicht von 380 g/m² erstellt. Das Gesamtflächengewicht der Trägerschicht 2 betrug 230 g/m². Die Stärke der Trägerschicht betrug 1,50 mm. Die Trägerschicht 2 wurde mit einem Polyestervlies erstellt, dessen Fäden eine Stärke von 3 Denier besaßen, wobei auf dieses Vlies ein Baumwollgewebe aufgebracht wurde, auf das die Beschichtung 4 aufgebracht wurde. Die Eindringtiefe der Kleberschicht 7 in die Trägerschicht 2 betrug 0,09 mm. Das Aufbringen der Kleberschicht 7 auf die Trägerschicht 2 erfolgte indirekt. Der Formatzuschnitt besitzt eine Gesamtstärke von 1,65 mm.
6. Es wurde ein Formatzuschnitt 1 mit einem Gesamtflächengewicht von 395 g/m² erstellt. Das Gesamtflächengewicht der Trägerschicht 2 betrug 290 g/m². Die Stärke der Trägerschicht 2 betrug 0,95 mm. Die Trägerschicht 2 wurde mit einem Polyestergewirke erstellt, dem Baumwolle zugesetzt wurde, wobei in dem Gewirke 60 Gew.-% Polyester und 40 Gew.-% Baumwolle enthalten sind; die Rückseite des Gewirkes war flauschig aufgeraut. Der Gesamtpolyurethangehalt betrug 105 g/m². Die Eindringtiefe der Kleberschicht 7 in die Trägerschicht 2 betrug 0,03 mm. Das Aufbringen der Kleberschicht 7 erfolgte indirekt. Die Gesamtstärke des Formatzuschnittes betrug 1,15 mm.
7. Es wurde ein Formatzuschnitt 1 mit einem Gesamtflächengewicht von 350 g/m² erstellt. Das Gesamtflächengewicht der Trägerschicht 2 betrug 285 g/m². Die Trägerschicht 2 besaß eine Stärke von 1,0 mm und wurde mit einem Polyestermikrofaservlies erstellt, das mit einer schwammartigen Polyurethaneinlagerung versehen war. Der gesamte Polyurethangehalt betrug 138 g/m². Die Kleberschicht 7 drang in die Trägerschicht 2 0,025 mm ein. Der Auftrag der Kleberschicht 7 auf die Trägerschicht 2 erfolgte direkt. Der Formatzuschnitt besaß eine Gesamtstärke von 1,1 mm.

Die bei diesen Formatzuschnitten eingesetzten Polyurethan-Dispersionen besitzen die in der Beschreibung angegebenen Parameter.

Alle erstellten Formatzuschnitte 1 erfüllen die an sie gestellten Aufgaben. In Hinblick auf ein Abbiegen bzw. Knicken erzielte der Formatzuschnitt 4 die schlechtesten und die Formatzuschnitte 3, 5 und 7 erzielten die besten Resultate. Die Formatzuschnitte 1, 2, 3, 5, 6 und 7 zeigten auch bei einer Dehnung von 15 % keine störend sichtbaren Oberflächenveränderungen.

Die Formatzuschnitte 1, bei denen die Dispersion der Kleberschicht 7 indirekt auf das Material der Trägerschicht 2 aufgebracht wurde, zeigten unter Berücksichtigung aller Kriterien die besseren Eigenschaften. Diese Formatzuschnitte sind auch einfacher und umweltfreundlicher herstellbar, weil weniger Energie benötigt wird und diese Formatzuschnitte eine bessere Optik zeigen. Diese Vorteile sind insbesondere auf das Einlegen der Trägerschicht 2 auf die noch nasse homogene Schicht 7 zurückzuführen, die in der Matrize auf die Beschichtung 4 aufgebracht worden ist.

Bei einer Shore A-Härteprüfung wird vorab aus der jeweilig eingesetzten Polyurethan enthaltenden Dispersionsmischung ein Prüfkörper mit einer Stärke von 5 mm hergestellt und dessen Härte ermittelt.

Vliese, deren Fasern im Denier-Bereich liegen, können durch mechanisches Nadeln oder mittels Wasserstrahl oder thermisches Fixieren verfestigt werden bzw. werden in dieser verfestigten Form eingesetzt. Die Lage ihrer Fasern ist immer dreidimensional.

Unter Vliesen aus Mikrofasern werden solche Vliese verstanden, deren Fasern durch Einlagerung in eine nasse, schwammartige Polyurethanschicht zusammengehalten werden. Derartige Vliese nehmen mindestens das zweifache ihres Gewichtes an Wasser auf, ohne zu tropfen.

Ein "indirektes" Aufbringen der Kleberschicht 7 bedeutet, dass die Dispersion über einen Träger, das heißt im vorliegenden Fall eine Matrize, auf der die Beschichtung 4 bzw. die Schichten 4' und 4" bereits ausgebildet sind, nass auf das Material der Trägerschicht 2 übertragen bzw. mit diesem in Kontakt gebracht wird, eben durch Aufbringen der Trägerschicht 2 auf die in der Matrize befindlichen Schichten.

Unter "direktem Aufbringen" wird verstanden, dass die Dispersion der Kleberschicht 7 direkt auf die Trägerschicht 2 aufgetragen wird.

Unter einem geringen Anpressdruck wird ein Druck verstanden, den ein Anpresszylinder mit einem Durchmesser von mehr als 300 mm mit seiner druckelastischen Ummantelung auf das Material der Trägerschicht 2 ausübt. Vorzugsweise ist ein maximaler Druck von 0,3 kg/cm², vorzugsweise von maximal 0,1 kg/cm², vorgesehen.

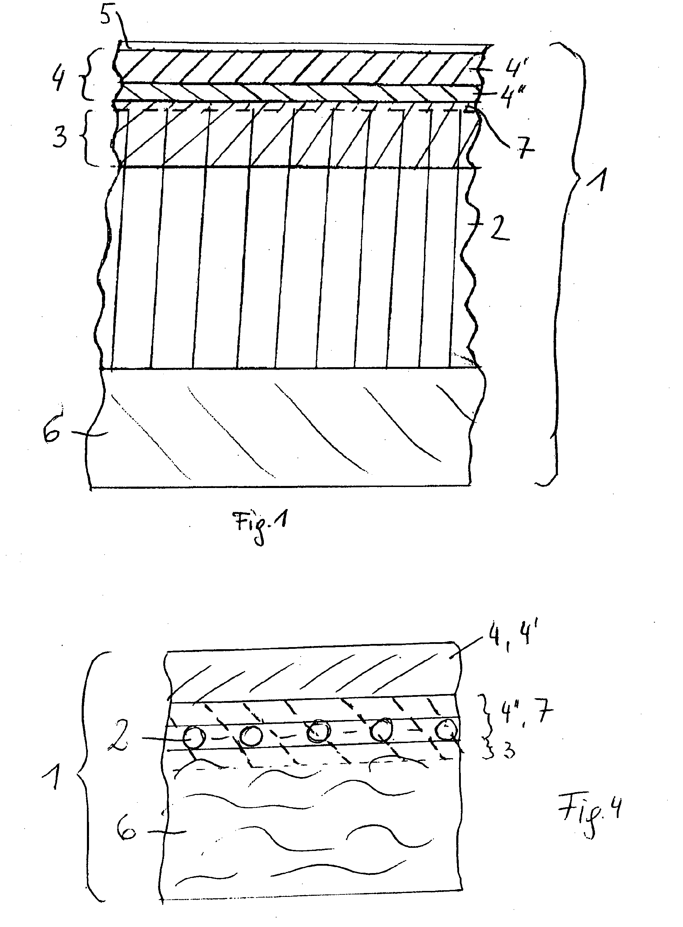

In Fig. 4 ist eine besonders vorteilhafte Ausführungsform eines erfindungsgemäßen Formatzuschnittes dargestellt. Dieser Formatzuschnitt besitzt als Trägerschicht 2 ein Gewirke oder Gewebe in Kombination mit einem Vlies 6 . Das Gewirke oder Gewebe ist dabei dünn bzw. weitmaschig ausgebildet. Beim insbesondere indirekten Aufbringen der Trägerschicht 2 auf die sich in der Matrize befindende Beschichtungsmasse bzw. Polyurethanschichten 4', 4", erfolgt ein Durchdrücken der nassen Polyurethandispersion durch das offene bzw. weitmaschige Gewirke oder Gewebe und die Dispersion dringt in das Vlies 6 bzw. in die Oberflächenbereiche 3 des Vlieses 6 ein. Der weitmaschige Gewirke- bzw. Gewebeträger 2 ist somit zwischen dem Vlies 6 und der Beschichtung 4 in die Kleberschicht 7 eingebettet.

Bevorzugt erfolgt die Applikation aller Schichten aus Polyurethandispersion auf die Matrize. Die Chemie bzw. Zusammensetzung für die Beschichtung 4 bzw. die Schicht 4" als Kleberschicht sind vorzugsweise identisch. Beim indirekten Aufbringen kann, insbesondere bei extrem saugfähigen Textilien, der Träger bzw. die Trägerschicht 2 direkt, insbesondere ohne polyurethanbeschichtet zu sein, in die völlig nasse Schicht 4" eingelegt werden. In diesem Fall beinhaltet dann die Schicht 4" auch die Chemie für die anderenfalls vorgesehene Kleberschicht 7, weil die Schicht 4" direkt und kontrolliert in die Trägerschicht 2 eindringt. Eine eigene bzw. eigens aufgebrachte Kleberschicht 7 kann in diesem Fall entfallen.

Strichliert ist in Fig. 4 die Polyurethankleberschicht 4" bzw. 7 angedeutet, in der das Gewebe bzw. Gewirke 2 eingebettet ist, die in das Vlies 6 im Bereich 3 eingedrungen ist und die Schicht 4' bzw. die Beschichtung 4 mit dem Vlies 6 verbindet.

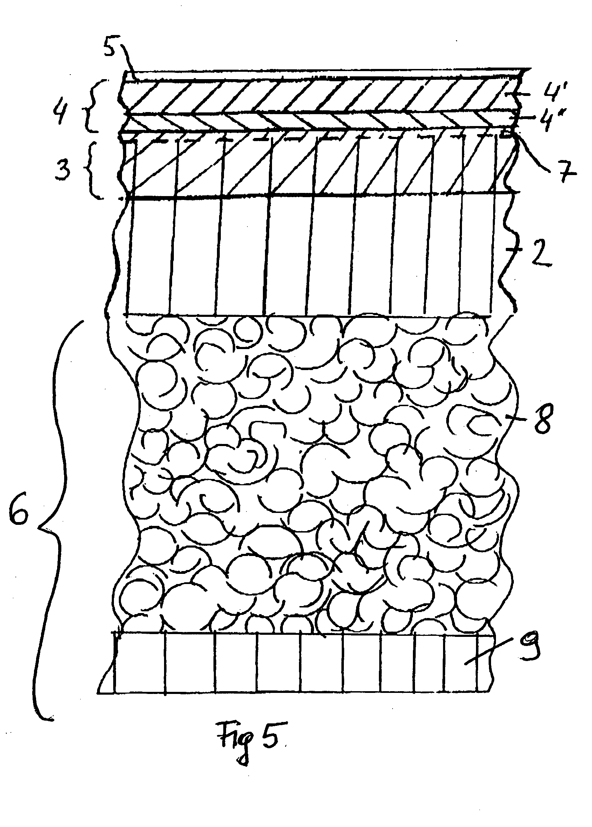

In Fig. 5 ist ein Formatzuschnitt dargestellt, der mit dem in Fig. 1 dargestellten Formatzuschnitt vergleichbar ist. Auf das Trägermaterial 2 ist rückseitig eine Schicht 6 angebunden, die eine Schicht 8 umfasst, die mit einem Schälschaum aus Polyurethan oder einem Chloropren- bzw. Polypren-Polymerisat-Schaum oder einem Nadelvlies bzw. einem Polyester- oder Polyamidvlies gebildet ist, welche Schicht 8 mit einem Gewirke 9 verbunden ist.

Um einen leichten, jedoch gleichzeitig starken bzw. dicken Formatzuschnitt zu erhalten, kann vorgesehen sein, dass die weitere Schicht 6 mehr als doppelt so dick ist wie das Trägermaterial 2 und ein Flächengewicht von 40 bis 60 % vom Gesamtflächengewicht des Trägermaterials 2 besitzt.

Besonders gute Ergebnisse hinsichtlich Festigkeit, Leichtigkeit und Strapazierfähigkeit ergeben sich, wenn der Polyurethan-Schälschaum 8 oder der Chloropren-Schaum eine Dichte von 0,005 bis 0,12 g/cm³, vorzugsweise von 0,01 bis 0,06 g/m³, und gegebenenfalls eine mittlere Dicke von 2 bis 4 mm, vorzugsweise 2,5 bis 3,5 mm, besitzt und/oder wenn das als Schicht 8 eingesetzte Nadelvlies ein Flächengewicht von 100 bis 200 g/m², vorzugsweise 120 bis 160 g/m², und eine mittlere Dicke von 2 bis 4 mm, vorzugsweise 2,5 bis 3,5 mm, besitzt und/oder wenn das die Rückseite ausbildende Gewirke 9 ein Flächengewicht von 60 bis 160 g/m², vorzugsweise 80 bis 100 160 g/m², besitzt.

Der gesamte Flächenzuschnitt enthält insgesamt eine geringe Menge an Polyurethan, wenn vorgesehen ist, dass das Flächengewicht des Polyurethan-Schälschaumes 8 einen Teil des Flächengewichtes des gesamten Polyurethangehaltes des Formatzuschnittes 1 darstellt. Ein erfindungsgemäßer Formatzuschnitt mit einer zusätzlichen Schicht 6 sowie diese in Fig. 5 dargestellt ist, ist vorteilhafterweise dadurch gekennzeichnet, dass die Schicht 6 an der Rückseite der Trägerschicht 2 angebracht ist, und dass gegebenenfalls bei einer Gesamtdicke von 0,9 bis 6 mm, vorzugsweise 2 bis 5 m, das Gesamtgewicht des Formatzuschnittes 1, insbesondere einschließlich der zumindest einen an der Rückseite des Trägermaterials 2 angebrachten Schicht 6, zwischen 250 und 600 g/m², insbesondere zwischen 270 und 550 g/m², liegt.

Die in Fig. 5 dargestellte Ausführungsform ist besonders vorteilhaft für eine Anwendung bei Autohimmel bzw. Autoinnenverkleidungen, Kindersitzen in Fahrzeugen, sowie Fahrzeug-Sitzbezügen oder Teilen davon. Ein derartiger Formatzuschnitt besitzt die gewünschte Stärke bei geringem Gewicht, eine angenehme Haptik und dämpft bei bester Polsterwirkung Geräusche in hohem Ausmaß. Die gegenüber bekannten Materialien erreichte Gewichtsreduzierung eines Formatzuschnittes bei Fahrzeugen hat auch einen hohen Stellenwert, um den CO₂-Ausstoß zu reduzieren und Antriebsenergie einzusparen, was insbesondere bei elektrisch betriebenen Fahrzeugen von Wichtigkeit ist. Auch bei einer Verwendung als Schuhschaftmaterial sind diese Eigenschaften von Vorteil.

Bei der Herstellung eines Formatzuschnittes gemäß Fig. 5 wird an ein textiles Trägermaterial 2 an die Schicht 6 angebunden und der Formatzuschnitt erreicht eine Stärke zwischen 2 bis 5 mm bei einem Flächengewicht von 270 bis 550 g/m². Der Aufbau des Formatzuschnittes umfasst ein Gewebe oder Gewirke, welches neben synthetischen Fasern bis zu 50 Gew-% Baumwollefasern enthält. An dieses Trägermaterial 2 wird die voluminöse Schicht 6 mit einem synthetischen Vlies bzw. Nadelvlies oder einem leichten Polyurethanschälschaum oder Chloropren-Poymerisatschaum angebunden. Die Unterschicht bzw. Rückseite des Formatzuschnittes 1 umfasst das Gewirke 9. Die voluminöse Vlies- oder Schaumstoffschicht 8 ist, vorzugsweise mehr als doppelt so stark bzw. dick, wie das mit einem leichten Gewebe oder leichtem Gewirke erstellte Trägermaterial 2 und ist am Gesamtflächengewicht des Trägermaterials mit maximal 50 Gew-% beteiligt. Um auf zum Verbinden bzw. Kaschieren einzusetzende Materialien zum Verbinden der einzelnen Schichten verzichten zu können, ist es zweckmäßig, wenn die unterschiedlichen Schichten direkt bei der Vliesherstellung miteinander verbunden werden. Falls die Schicht 8 aus einem mehr als 2 mm starken Polurethanschälschaum besteht, können die textile Trägerschicht 2 und die mit einem Gewirke 9 gebildete Schicht durch an sich bekanntes Flammkaschieren mit dem Polyurethanschälschaum verbunden werden. Bei Chloroprenschäumen kann das Gewirke 9 bei der Schaumherstellung mit diesem verbunden werden. Der Polyurethan-Schälschaum bzw. der Chloroprenschaum besitzen jeweils eine Dichte von 0,005 bis 0,12 g/cm³, vorzugsweise von 0,01 bis 0,06 g/cm³. Prinzipiell ist es auch möglich, durch Erhöhung der Dicke der Schicht 8 bzw. der mit dem Gewirke 9 gebildeten Schicht noch dickere Formatzuschnitte herzustellen, die bei einer Stärke von 5 mm ein Flächengewicht von 600 g/m² nicht überschreiten. Auch bei noch größeren Dicken wird ein Flächengewicht von 600 g/m² zumeist nicht überschritten, da die Flächengewichte des eingesetzten Polyurethanschälschaums oder Chloroprenschaumes oder eines eingesetzten Nadelvlieses sehr gering sind.

Der Gesamtpolyurethananteil des mit einer Schicht 6 entsprechend Fig. 5 versehenen Formatzuschnittes bleibt nahezu unverändert, weil die Schicht 8 mit einem Polyurethanschälschaum erstellt wird und dieser Schaum sehr leicht ist. Zum Verbinden mit der textilen Trägerschicht 2 und dem Gewirke 9 wird Flammkaschieren eingesetzt, sodass kein weiterer Klebstoff erforderlich wird.

Bei Chloroprenschäumen wird die Schicht 8 vorzugsweise bei dessen Herstellung gleichzeitig mit der Schicht 9 verbunden. Es ist möglich, die Trägerschicht 2 ebenfalls mit der Schicht 8 bzw. mit den Chloroprenschaum ohne zusätzliche Klebstoffe oder Klebermassen bei dessen Herstellung zu verhindern.

Wenn die leichte voluminöse Schicht 8 mit einem Nadelvlies gebildet wird, so könnten zumindest das Gewirke 9 und allenfalls auch das Gewirke der Trägerschicht 2 bereits bei der Herstellung mit dem Vlies der Schicht 8 verbunden werden. Demzufolge ist auch hier kein Einsatz von zusätzlichem Klebstoff, insbesondere Polyurethanklebemasse, erforderlich. Deshalb bleibt das sehr positive Gewichtsverhältnis zwischen textilem Trägermaterial und dem gesamten Polyurethananteils eines Formatzuschnittes unverändert gering.

Diese Gewichtseinsparung ist bei ansonsten entsprechenden Festigkeits- und Haltbarkeitseigenschaften ein wesentliches Kriterium für den Einsatz derartiger Flächenzuschnitte bei Kraftfahrzeugen.

Im Folgenden wird der Aufbau eines Formatzuschnittes gemäß Fig. 5 anhand von Beispielen näher erläutert.
8. Es wurde ein Formatzuschnitt 1 erstellt, mit einem Gesamtflächengewicht von 560 g/m2. Das Gesamtflächengewicht der Trägerschicht 2 betrug 410 g/m². Die Gesamtstärke des mit den Schichten 2 und 6 gebildeten Formatzuschnittes betrug 3,8 mm. Die Trägerschicht 2 wurde erstellt, indem ein Gewirke mit 50 Gew-% Baumwollfasern und 50 Gew-% Polyesterfasern eingesetzt wurde. Das Flächengewicht dieses Gewirkes betrug 205 g/m². Das angebundene Vlies 8 wurde mit Polyesterfasern gebildet und besaß ein Flächengewicht von 110 g/m². Das für die Schicht 6 eingesetzte Gewirke 9 auf der Rückseite des Formatzuschnittes wurde mit Polyesterfasern gebildet und besaß ein Flächengewicht von 95 g/m². Bei der Vliesherstellung wurden die leichten Gewirke mit dem Vlies durch Nadeln verbunden. Das gesamte Flächengewicht des im Formatzuschnitt enthaltenen Polyurethans betrug 150 g/m². Dieser gebildete textile Verbund wurde mit seiner Oberfläche auf die nasse, sich auf der Matrize befindliche Klebermasse 7 aufgelegt und leicht angedrückt. Der mit der Beschichtung 4 versehene Formatzuschnitt besaß sodann eine Gesamtstärke von 3,95 mm.
9. Es wurde ein Formatzuschnitt 1 mit einem Gesamtflächengewicht von 530 g/m² erstellt. Das Gesamtflächengewicht der dreischichtigen Trägerschicht 2 betrug 390 g/m². Die Gesamtstärke des Formatzuschnittes betrug 3,5 mm. Dazu wurde ein die Oberfläche bildendes Gewirke aus Polyesterfasern mit einem Flächengewicht von 185 g/m² mit einer Schicht 6, umfassend einen Polyurethanschälschaum mit einem Flächengewicht von 110 g/m² verbunden. Die Unterseite des Formatzuschnittes bildete ein Polyestergewirke 9 mit einem Flächengewicht von 95 g/m². Die beiden Gewirke, das heißt das Gewirke der Trägerschicht 2 und das Gewirke 9 wurden mittels Flammkaschierung mit dem Polyurethanschälschaum 8 verbunden. Zum Verbinden der Beschichtung 4 mit der Trägerschicht 2 wurde Klebermasse 7 zur Hälfte in die Matrize zur Ausbildung der Kleberschicht 4' und zur Hälfte auf die Oberfläche des Gewirkes der Trägerschicht 2 zur Ausbildung der Schicht 4" aufgetragen. Beide Schichten wurden feucht zusammengebracht. Der gesamte Polyurethangehalt des Formatzuschnittes besaß ein Flächengewicht von 230 g/m². Die Gesamtstärke des Formatzuschnittes betrug 4,3 mm.
10. Es wurde ein Formatzuschnitt 1 mit einem Gesamtflächengewicht von 560 g/m² und einer Stärke von 3,25 mm erstellt. Um diesen Formatzuschnitt 1 zu erstellen, wurde ein zwei Millimeter starker Schaum aus Chloropren-Polymerisat mit einer Dichte von 0,06 g/cm³ eingesetzt, der auf seiner Oberseite mit einem Polyestergewirke mit einem Flächengewicht von 120 g/m² und auf seiner Rückseite mit einem Polyestergewirke mit einem Flächengewicht von 65 g/m² verbunden war.

Diese an beiden Seiten mit einem Gewirke versehene Schicht 8 aus Chloropren-Polymerisat-Schaum wurde mit einem Klebstoff mit der Rückseite der Trägerschicht 2 verbunden, welche aus einem Baumwolle/Polestergewebe bestand und ein Flächengewicht von 160g/m² besaß, verbunden. Die Polyurethanbeschichtung besaß ein Flächengewicht von 115 g/m² und war etwa 0,04mm in das Trägermaterial eingezogen.

## Patentansprüche

1. Formatzuschnitt umfassend ein mit einem Faservlies und/oder Gewirke und/oder Gewebe aus Polyamid- und/oder Polyesterfäden, insbesondere Polyamid- und/oder Polyestermikrofasern und/oder Baumwollfäden, gebildetes, insbesondere bahnenförmiges bzw. schichtförmiges, Trägermaterial (2) und eine auf dem Trägermaterial (2) aufgebrachte Beschichtung (4), die mit Polyurethandispersion auf einer strukturierten Silikonkautschukunterlage bzw. -form gebildet ist und über eine mit Polyurethandispersion gebildete, eigene Kleberschicht (7) an dem Trägermaterial (2) angebunden ist, **dadurch gekennzeichnet,**
- **dass** die Beschichtung (4) mit zwei miteinander verbundenen Schichten aufgebaut ist und eine oberflächlich gelegene Oberschicht (4') und eine darunter liegende Zwischenschicht (4") umfasst,
- wobei die Beschichtung (4) mit einer verfestigten Polyurethandispersionsmischung erstellt ist, die zwischen 2 und 10 Gew.-% nicht emigrierbares Polysiloxan enthält und vernetzt ist,
- wobei in allen Schichten (4', 4") der Beschichtung (4) und in der Kleberschicht (7) ein Vernetzer enthalten ist und die einzelnen Schichten (4', 4") und die Kleberschicht (7) durch Aneinanderfügen in noch feuchtem oder nassem Zustand miteinander quervernetzt sind,
- **dass** weiters zur Verbindung zwischen der Zwischenschicht (4") bzw. der Kleberschicht (7) und dem Trägermaterial (2) die mit Polyurethandispersion gebildete Kleberschicht (7) zu 10 bis 40 %, vorzugsweise 10 bis 20 %, der Dicke des Trägermaterials (2) in dieses eingedrungen bzw. eingezogen ist,
- wobei die mit Polyurethandispersion gebildete Kleberschicht (7) 0,02 bis 0,6 mm, vorzugsweise 0,05 bis 0,4 mm, tief in die Trägerschicht (2) eingezogen bzw. eingebracht ist,
- **dass** weiters im Trägermaterial (2) maximal 30 Gew.-%, vorzugsweise maximal 20 Gew.-%, der Gesamtmenge der im Formatzuschnitt (1) enthaltenen verfestigten Polyurethandispersion vorliegen,
- **dass** die Bereiche (3) des Trägermaterials (2), in welche die Polyurethandispersion der Kleberschicht (7) beim Auftragen kontrolliert eingedrungen ist, eine Dichte besitzen, welche zwischen 15 % und 55 %, vorzugsweise zwischen 20 und 35 %, über der Dichte der restlichen bzw. der polyurethanfreien Bereiche des Trägermaterials (2) liegt,
- **dass** das gesamte Polyurethan-Flächengewicht des Formatzuschnittes (1) 60 bis 240 g/m² beträgt, wobei dieses Flächengewicht auch allenfalls bereits im Trägermaterial (2) vorliegendes bzw. in dieses bei dessen Herstellung eingebrachtes Polyurethan umfasst,
- **dass** das Flächengewicht des Trägermaterials (2), gegebenenfalls samt darin enthaltenem Polyurethan, 200 bis 450 g/m² beträgt,
- **dass** die Beschichtung (4) mit einer Polyurethandispersion erstellt ist, die eine Härte von weniger als 68 Shore A besitzt,
- **dass** die Kleberschicht (7) mit einer mit einem Flächengewicht von 20 bis 80 g/m² aufweisenden, gegebenenfalls Polyacrylate und/oder Kunstharze enthaltenden, Schicht einer Polyurethandispersion gebildet ist, und vorzugsweise einen sehr ähnlichen chemischen Aufbau wie die Polyurethandispersionsschicht (4") besitzt, und
- **dass** die Zwischenschicht (4") und die Kleberschicht (7) eine Härte von weniger als 48 Shore A, vorzugsweise zwischen 20 und 35 Shore A, besitzen.

2. Formatzuschnitt nach Anspruch 1, **dadurch** h gekennzeichnet, dass der gesamte Polyurethangehalt des Formatzuschnitts 80 bis 150 g/m², insbesondere 100 bis 140 g/m², das Flächengewicht des Trägermaterials (2), gegebenenfalls samt allenfalls darin enthaltenem Polyurethan 200 g/m² bis 350 g/m², insbesondere 230 g/m² bis 270 g/m² beträgt.und
- dass die Beschichtung (4) mit einer Polyurethandispersion erstellt ist, die eine Härte von weniger als 55 Shore A besitzt.

3. Formatzuschnitt nach Anspruch 1 oder 2, **dadurch gekennzeichnet, dass** die, insbesondere in Form eines Films aufgebrachte, Beschichtung (4) ein Flächengewicht von 60 bis 240g/m², vorzugsweise von 60 bis 160g/m², besitzt.

4. Formatzuschnitt nach einem der Ansprüche 1 bis 3, **dadurch gekennzeichnet, dass** dessen Beschichtung (4) weitgehend wasserdicht und/oder wasserdampfdurchlässig ist, wobei gegebenenfalls durch das Aufbringen der Kleberdispersion (7) auf die Trägerschicht (2) die Wasserdichtigkeit und Wasserdampfdurchlässigkeit beeinflusst bzw. gesteuert ist.

5. Formatzuschnitt nach einem der Ansprüche 1 bis 4, **dadurch gekennzeichnet, dass** die Kleberschicht (7) mit 20 bis 80 g/m² auf bzw. in das Trägermaterial (2) aufgebracht bzw. eingelagert ist, wobei gegebenenfalls die Kleberschicht (7) direkt auf das Trägermaterial (2) aufgebracht, insbesondere aufgesprüht, ist oder die Verbindung der Kleberschicht (7) mit dem Trägermaterial (2) durch Auf- bzw. Einlegen der Schicht des Trägermaterials (2) auf die Kleberschicht (7) indirekt erfolgt ist.

6. Formatzuschnitt nach einem der Ansprüche 1 bis 5, **dadurch gekennzeichnet, dass** die Beschichtung (4) mit zwei untrennbar miteinander verbundenen Schichten aufgebaut ist und eine oberflächlich gelegene, oberflächlich strukturierte Oberschicht (4') aus Polyurethandispersion und eine darunter liegende und mit der Oberschicht (4') verbundene, mit einer, gegebenenfalls Polyacrylate und/oder Kunstharze enthaltenden, Polyurethandispersion gebildete Zwischenschicht (4") umfasst, wobei zur Verbesserung der Verbindung zwischen der mit Polyurethandispersion gebildeten Zwischenschicht (4") und dem Trägermaterial (2) zwischen der Polyurethandispersionsschicht (4") und der Oberfläche des Trägermaterials (2) die mit Polyurethan gebildete und in diese Trägerschicht zumindest teilweise eingezogene Kleberschicht (7) vorgesehen ist.

7. Formatzuschnitt nach einem der Ansprüche 1 bis 6, **dadurch gekennzeichnet, dass** auf der Oberfläche der Beschichtung (4) eine Struktur ausgebildet ist, wobei die strukturierte Beschichtung (4) das Aussehen von geschliffenen Schaumstoffteilen, geschliffenem Gummi, Schleifpapier oder Waffelmustern oder von einem technischen Gewebe, wie z.B. einem Gewebe oder Gewirke aus Glas- oder Kohlenstofffasern, oder ein technisches Aussehen oder eine Veloursstruktur oder ein narbenleder- oder nubukartiges Aussehen zeigt.

8. Formatzuschnitt nach einem der Ansprüche 1 bis 7, **dadurch gekennzeichnet, dass** auf die Oberfläche der Beschichtung (4) eine sehr dünne, hydrophobe Finish-Schicht (5) in einer Stärke von weniger als 0,005 mm mit Nanoteilchen aus Polysiloxan oder aus Wachs oder aus Fluorpolymeren oder aus Mischungen von diesen aufgebracht ist.

9. Formatzuschnitt nach einem der Ansprüche 1 bis 8, **dadurch gekennzeichnet, dass** die oberflächig strukturierte Beschichtung (4) durch Aufsprühen der Polyurethandispersion auf eine heiße oder warme entsprechend negativ strukturierte Silikonmatrize hergestellt ist.

10. Formatzuschnitt nach einem der Ansprüche 1 bis 9, **dadurch gekennzeichnet, dass** die auf einer Silikonmatrize hergestellte und auf das Trägermaterial (2) aufgebrachte Beschichtung (4) inklusive der Kleberschicht (7) und von allenfalls im Trägermaterial (2) enthaltenem Polyurethan keine organischen, insbesondere bei der Herstellung von Polyurethan eingesetzten, Lösungsmittel enthält und frei von derartigen organischen Lösungsmitteln ist.

11. Formatzuschnitt nach einem der Ansprüche 1 bis 10; **dadurch gekennzeichnet, dass** die Beschichtung (4) mit der Oberschicht (4') und der Zwischenschicht (4") mit einer negativ strukturierten Unterlage bzw. Form aus Silikonkautschuk durch Verfestigung einer Polyurethan enthaltenden Dispersion gebildet ist und die Oberfläche der Beschichtung (4) mit dieser Matrize erstellt bzw. strukturiert ist.

12. Formatzuschnitt nach Anspruch 11, **dadurch gekennzeichnet, dass** die auf die Kleberschicht (7) aufgebrachte Beschichtung (4) in noch feuchtem Zustand, insbesondere weitgehend druckfrei und mit einer Temperatur von nicht mehr als 80°C, aufgebracht ist.

13. Formatzuschnitt nach einem der Ansprüche 1 bis 12, **dadurch gekennzeichnet, dass** an der Rückseite der Trägerschicht (2) zumindest eine weitere Schicht (6) angebracht ist, und dass gegebenenfalls bei einer Gesamtdicke von 0,9 bis 6 mm, vorzugsweise 2 bis 5 mm, das Gesamtgewicht des Formatzuschnittes (1), insbesondere einschließlich der zumindest einen an der Rückseite des Trägermaterials (2) angebrachten Schicht (6), zwischen 250 und 600 g/m², insbesondere zwischen 270 und 550 g/m², liegt.

14. Formatzuschnitt nach einem der Ansprüche 1 bis 13, **dadurch gekennzeichnet, dass** auf das Trägermaterial (2) auf seiner der Beschichtung (4) abgewandten Rückseite eine Schicht (6) aus dem Verbund eines Polyurethan-Schälschaums (9) mit einem Gewirke (8) angebunden ist.

15. Formatzuschnitt nach einem der Ansprüche 1 bis 14, **dadurch gekennzeichnet, dass** die Fasern des Vlieses mit Polyester und/oder Polyamid und/oder Baumwolle gebildet sind und/oder dass die Garne bzw. Fäden des Gewirkes oder Gewebes aus Polyester und/oder Polyamid gegebenenfalls mit einem Anteil von bis zu 40 Gew.-%, vorzugsweise bis zu 45 Gew.-%, Baumwolle bzw. Baumwollfäden und/oder nur mit Baumwolle bzw. Baumwollfäden gebildet sind.

16. Formatzuschnitt nach einem der Ansprüche 1 bis 15, **dadurch gekennzeichnet, dass** die Kleberschicht (7) zu 50 bis 85 Gew.-% mit kristalline Struktur besitzendem Polyurethan aufgebaut und vernetzt ist und/oder 0,02 bis 0,6 mm, insbesondere 0,05 bis 0,4 mm, tief von der Oberfläche her direkt oder indirekt in das saugfähige Trägermaterial (2) des Formatzuschnittes (1) von der Materialoberfläche her eingelagert bzw. eingezogen ist und/oder dass die Kleberschicht (7) mit einem Gewicht von 20 bis 80 g/m² von der
Oberfläche her auf das Trägermaterial (2) aufgebracht und zumindest zum Teil in dieses eingelagert ist.

17. Formatzuschnitt nach einem der Ansprüche 1 bis 167, **dadurch gekennzeichnet, dass** die als Kleberschicht fungierende Zwischenschicht (4") und/oder die Kleberschicht (7) jeweils bis zu 50 Gew.-%, vorzugsweise bis zu 25 Gew.-%, Polyacrylate enthalten bzw. enthält.

18. Formatzuschnitt nach einem der Ansprüche 1 bis 17, **dadurch gekennzeichnet, dass** die gemeinsame Gesamtdicke der Oberflächenschicht (4) und der Kleberschicht (7) 0,05 bis 0,65 mm beträgt.

19. Formatzuschnitt nach einem der Ansprüche 1 bis 18, **dadurch gekennzeichnet, dass** das Polyester- oder Polyamidgewirke oder -gewebe des Trägermaterials (2) zwischen 10 und 45 Gew.-%, vorzugsweise zwischen 20 und 30 Gew.-%, Baumwollfäden enthält und/oder dass Baumwollgewebe oder -gewirke ein Flächengewicht zwischen 100 g/m² und 200 g/m² aufweist und ein gegebenenfalls mit diesen Geweben oder Gewirken verbundenes Vlies ein Flächengewicht von 100 g/m² bis 200 g/m² aufweist.

20. Formatzuschnitt nach einem der Ansprüche 1 bis 19, **dadurch gekennzeichnet, dass** die Oberfläche der Beschichtung (4) mit zumindest zwei unterschiedlichen Bereichen betreffend Struktur und/oder Friktionen und/oder Aussehen ausgebildet ist.

21. Formatzuschnitt nach einem der Ansprüche 1 bis 20, **dadurch gekennzeichnet, dass** die Trägerschicht (2) bzw. das Trägermaterial mit zwei unterschiedlichen, miteinander verbundenen Textilien, wie z.B. Gewirke-Vlies oder Gewebe-Vlies, aufgebaut ist, wobei die dehnungsärmeren, dünnen Textilien eine weitmaschige Struktur aufweisen und der Beschichtung (4) nahe liegen bzw. auf diese dehnungsärmeren Textilien die Beschichtung (4) aufgebracht ist, oder wobei die dehnungsärmeren Textilien in die Kleberschicht (7) weitgehend oder zur Gänze eingebettet sind.

22. Formatzuschnitt nach einem der Ansprüche 1 bis 21, **dadurch gekennzeichnet, dass** alle Schichten (4, 4',4" und 7) nass oder feucht zusammen gebracht bzw. aneinander gelegt und mittels des in ihnen enthaltenen Vernetzers miteinander verbunden bzw. vernetzt sind.

23. Formatzuschnitt nach einem der Ansprüche 1 bis 22, **dadurch gekennzeichnet, dass** das Trägermaterial (2) mit färbigen bzw. unterschiedliche Farben besitzenden Fasern oder Garnen gebildet ist und/oder färbig bedruckt ist, und/oder dass das Material der Beschichtung (4) transparent oder transparent-färbig ist.

24. Formatzuschnitt nach einem der Ansprüche 1 bis 23, **dadurch gekennzeichnet, dass** die Trägerschicht bzw. das Trägermaterial (2) ein Vlies umfasst, auf das ein weitmaschiges, offenes Gewebe oder Gewirke aufgebracht ist, wobei die Kleberschicht (7) bzw. die Schicht (4") das Gewebe oder Gewirke durchdringend in die Oberflächenbereiche des Vlieses eingezogen bzw. eingebracht ist.

25. Formatzuschnitt nach einem der Ansprüche 1 bis 23, **dadurch gekennzeichnet, dass** die Trägerschicht (2) aus einem - einen geringen Gehalt an Polyurethan aufweisenden - Mikrofasermaterial gebildet ist, welches Polyurethan als eine schwammartige bzw. schwammige Struktur besitzende Polyurethanimprägnierung vorliegt.

26. Mit einem Formatzuschnitt (1) nach einem der Ansprüche 1 bis 25 gebildete Gegenstände in Form von Kraftfahrzeuginnenwandverkleidungen und -polsterungen, Taschen, Koffern, Möbelbezügen, Bekleidungsstücken, Schuhen, Fahrrad- oder Motorradsätteln oder Kartentaschen bzw. Verwendung von derartigen Formatzuschnitten zur Herstellung dieser Gegenstände.

## Claims

1. Cut-to-size format comprising a more particularly sheeting-shaped or layer-shaped backing material (2) comprising a fibrous nonwoven web and/or loop-formingly knitted and/or woven fabric comprising polyamide and/or polyester threads, more particularly polyamide and/or polyester microfibers and/or cotton threads and, applied atop said backing material (2), a coating (4) comprising polyurethane dispersion on a patterned silicone rubber support/mould attached to said backing material (2) via an intrinsic adhesive layer (7) comprising polyurethane dispersion, **characterized**
- **in that** the coating (4) is constructed with two inseparably interconnected layers and comprises a surficially positioned top layer (4') and an interlayer (4") thereunder,
- wherein the coating (4) is produced with a solidified polyurethane dispersion which contains between 2 and 10 wt% of non-emigratable polysiloxane and has been crosslinked,
- wherein a crosslinker is present in all layers (4', 4") of the coating (4) and in the adhesive layer (7) and the individual layers (4', 4") and the adhesive layer (7) are transversely crosslinked with one another by having been joined together in the still moist or wet state,
- **in that** furthermore to establish the bond between the interlayer (4") or the adhesive layer (7) and the backing material (2), the adhesive layer (7) formed with polyurethane dispersion has penetrated or soaked into the thickness of the backing material (2) to an extent of from 10 to 40%, preferably 10 to 20%,
- wherein the adhesive layer (7) formed with polyurethane dispersion has soaked/entered the backing layer (2) to a depth of 0.02 to 0.6 mm, preferably 0.05 to 0.4 mm,
- **in that** furthermore the backing material (2) comprises not more than 30 wt%, preferably not more than 20 wt%, of the total amount of solidified polyurethane dispersion present in the cut-to-size format (1),
- **in that** the regions (3) of the backing material (2) into which the polyurethane dispersion of the adhesive layer (7) has penetrated in a controlled manner on application have a density which is between 15% and 55%, preferably between 20 and 35%, above the density of the remaining or polyurethane dispersion-free regions of the backing material (2),
- **in that** the entire polyurethane basis weight of said cut-to-size format (1) is in the range from 60 to 240 g/m², this basis weight also including any polyurethane already present in said backing material (2) or introduced thereinto in the course of production thereof,
- **in that** the basis weight of said backing material (2), including where applicable polyurethane present therein, is in the range from 200 to 450 g/m²,
- **in that** the coating (4) is produced with a polyurethane dispersion having a hardness of less than 68 Shore A,
- **in that** the adhesive layer (7) is formed with a polyurethane dispersion layer having a basis weight of 20 to 80 g/m² and optionally comprising polyacrylates and/or synthetic resins and preferably has a very similar chemical construction to the polyurethane dispersion layer (4"), and
- **in that** the interlayer (4") and the adhesive layer (7) have a hardness of less than 48 Shore A, preferably between 20 and 35 Shore A.

2. Cut-to-size format according to Claim 1, **characterized in that** the entire polyurethane content of the cut-to-size format is 80 to 150 g/m², in particular 100 to 140 g/m², the basis weight of the backing material (2), optionally together with any polyurethane present therein is 200 g/m² to 350 g/m², in particular 230 g/m² to 270 g/m², and
- **in that** the coating (4) is produced with a polyurethane dispersion having a hardness of less than 55 Shore A.

3. Cut-to-size format according to Claim 1 or 2, **characterized in that** said coating (4), which is more particularly applied in the form of a film, has a basis weight in the range from 60 to 240 g/m² and preferably in the range from 60 to 160 g/m².

4. Cut-to-size format according to any of Claims 1 to 3, **characterized in that** its coating (4) is substantially waterproof and/or water vapour permeable, wherein the waterproofness and water vapour permeability is optionally influenced/controlled by applying the adhesive dispersion (7) to the backing layer (2).

5. Cut-to-size format according to any of Claims 1 to 4, **characterized in that** said adhesive layer (7) has been applied atop/incorporated into said backing material (2) at from 20 to 80 g/m², wherein optionally said adhesive layer (7) has been applied to said backing material (2) directly, especially by spraying, or the bonding of said adhesive layer (7) to said backing material (2) has been effected indirectly by placing/inlaying the layer of said backing material (2) onto said adhesive layer (7).

6. Cut-to-size format according to any of Claims 1 to 5, **characterized in that** said coating (4) is constructed with two inseparably interconnected layers and comprises a surficially positioned, surficially patterned top layer (4') comprising polyurethane dispersion, and an interlayer (4") thereunder and connected with the top layer (4') and comprising a polyurethane dispersion which optionally contains polyacrylates and/or synthetic resins, wherein to improve the bond between said interlayer (4") comprising polyurethane dispersion and said backing material (2) there is provided between said polyurethane dispersion layer (4") and the surface of said backing material (2) said adhesive layer (7) comprising polyurethane and at least partly soaked into this backing layer.

7. Cut-to-size format according to any of Claims 1 to 6, **characterized in that** there is a pattern on the surface of said coating (4), wherein said patterned coating (4) has the appearance of buffed parts of foamed plastic, buffed rubber, emery paper or waffling or of an industrial fabric, for example a loop-formingly woven or knitted fabric comprising glass or carbon fibres, or a technical appearance or a velour pattern or an appearance like grained leather or nubuck.

8. Cut-to-size format according to any of Claims 1 to 7, **characterized in that** said surface of said coating (4) has a very thin, hydrophobic finish layer (5) in a thickness of less than 0.005 mm with nanoparticles of polysiloxane or of wax or of fluoropolymers or of mixtures thereof.

9. Cut-to-size format according to any of Claims 1 to 8, **characterized in that** the surficially patterned coating (4) is produced by spraying the polyurethane dispersion onto a hot or warm correspondingly negatively patterned silicone matrix.

10. Cut-to-size format according to any of Claims 1 to 9, **characterized in that** said coating (4) was produced on a silicone die and applied atop said backing material (2) and taking together with said adhesive layer (7) and any polyurethane present in said backing material (2) at the most does not contain any organic solvents, especially those used in the production of polyurethane, and is free of such organic solvents.

11. Cut-to-size format according to any of Claims 1 to 10, **characterized in that** said coating (4) comprising said top layer (4') and said interlayer (4") is formed with a negatively patterned support/mould of silicone rubber by solidifying a polyurethane-containing dispersion and said surface of said coating (4) is produced/patterned with this die.

12. Cut-to-size format according to Claim 11, **characterized in that** said coating (4) applied atop said adhesive layer (7) was applied in the still moist state, in particular largely pressurelessly and with a temperature of not more than 80°C.

13. Cut-to-size format according to any of Claims 1 to 12, **characterized in that** at least one further layer (6) is attached to the reverse side of said backing layer (2), and **in that** optionally for an overall thickness of 0.9 to 6 mm and preferably 2 to 5 mm, the overall weight of said cut-to-size format (1), especially inclusive of said at least one layer (6) attached to said reverse side of said backing material (2), is between 250 and 600 g/m² and especially between 270 and 550 g/m².

14. Cut-to-size format according to any of Claims 1 to 13, **characterized in that** the backing material (2) attaches on its reverse side, the side which faces away from the coating (4), to a layer (6) comprising a bonded assembly formed between a peelable polyurethane foam (9) and a loop-formingly knitted fabric (8).

15. Cut-to-size format according to any of Claims 1 to 14, **characterized in that** the fibres of said fibrous nonwoven web comprise polyester and/or polyamide and/or cotton, and/or **in that** the yarns/threads of said loop-formingly knitted or woven fabric comprise polyester and/or polyamide with or without a proportion of up to 40 wt% and preferably up to 45 wt% of cotton or cotton threads, and/or exclusively cotton or cotton threads.

16. Cut-to-size format according to any of Claims 1 to 15, **characterized in that** said adhesive layer (7) comprises 50 to 85 wt% of crystalline polyurethane and is crosslinked, and/or has soaked/become embedded into the absorbent backing material (2) of said cut-to-size format (1) from the material surface, directly or indirectly, to a depth of 0.02 to 0.6 mm and especially 0.05 to 0.4 mm measured from the surface, and/or **in that** said adhesive layer (7) has been applied atop said backing material (2) from the surface at a weight of 20 to 80 g/m² and has become at least partly incorporated therein.

17. Cut-to-size format according to any of Claims 1 to 16, **characterized in that** said interlayer (4") acting as adhesive layer, and/or said adhesive layer (7) each contain/contains up to 50 wt% and preferably up to 25 wt% of polyacrylates.

18. Cut-to-size format according to any of Claims 1 to 17, **characterized in that** the conjoint overall thickness of said surface layer (4) and said adhesive layer (7) is in the range from 0.05 to 0.65 mm.

19. Cut-to-size format according to any of Claims 1 to 18, **characterized in that** the loop-formingly knitted or woven polyester or polyamide fabric of said backing material (2) contains between 10 and 45 wt% and preferably between 20 and 30 wt% of cotton threads, and/or **in that** loop-formingly knitted or woven cotton fabric has a basis weight between 100 g/m² and 200 g/m² and any fibrous nonwoven web optionally bonded to these wovens or formed-loop knits has a basis weight of 100 g/m² to 200 g/m².

20. Cut-to-size format according to any of Claims 1 to 19, **characterized in that** said surface of said coating (4) comprises at least two different regions as regards texture and/or frictions and/or appearance.

21. Cut-to-size format according to any of Claims 1 to 20, **characterized in that** said backing layer (2)/said backing material comprises two different interconnected textiles, for example a loop-formingly knitted fabric connected to a fibrous nonwoven web or a woven fabric connected to a fibrous nonwoven web, wherein the less extensible, thin textiles have a wide-mesh structure and are close to said coating (4), or to be more precise said coating (4) is applied atop these less extensible textiles, or wherein the less extensible textiles are largely or wholly embedded into said adhesive layer (7).

22. Cut-to-size format according to any of Claims 1 to 21, **characterized in that** all layers (4, 4', 4" and 7) were brought together or to be more precise laid on top of one another in the wet or moist state and bonded/crosslinked to one another by means of the crosslinker they contain.

23. Cut-to-size format according to any of Claims 1 to 22, **characterized in that** said backing material (2) comprises coloured or to be more precise differently coloured fibres or yarns and/or is colour printed, and/or **in that** said material of said coating (4) is transparent or transparently coloured.

24. Cut-to-size format according to any of Claims 1 to 23, **characterized in that** said backing layer/backing material (2) comprises a fibrous nonwoven web whereatop a wide-mesh, open woven or loop-formingly knitted fabric has been applied, wherein said adhesive layer (7) or said layer (4") has penetrated through said woven or loop-formingly knitted fabric to soak or be incorporated into the surface regions of said fibrous nonwoven web.

25. Cut-to-size format according to any of Claims 1 to 23, **characterized in that** said backing layer (2) is formed from a microfibre material which comprises a low level of polyurethane, which polyurethane is present as a polyurethane impregnation which is sponge-like and/or possesses a spongy structure.

26. Use of a cut-to-size format (1) according to any of Claims 1 to 25 to produce articles in the form of motor vehicle inside wall lining and cushioning, bags, suitcases, furniture covers, garments, shoes, bicycle or motorbike saddles or map cases, or an article obtained using a cut-to-size format of this type.

## Revendications

1. Découpe au format comprenant un matériau support (2) formé avec un non-tissé fibreux et/ou un tricot et/ou un tissu en fils de polyamide et/ou de polyester, notamment en microfibres de polyamide et/ou de polyester et/ou en fils de coton, notamment en forme de bande ou en forme de couche, et un revêtement (4) appliqué sur le matériau support (2), qui est formé avec une dispersion de polyuréthane sur un substrat ou un moule structuré en caoutchouc de silicone et relié par une couche adhésive propre (7), formée avec une dispersion de polyuréthane, au matériau support (2), **caractérisée**
- **en ce que** le revêtement (4) est formé avec deux couches reliées l'une à l'autre et comprend une couche supérieure disposée en surface (4') et une couche intermédiaire (4") disposée en dessous,
- le revêtement (4) étant fabriqué avec un mélange de dispersion de polyuréthane solidifié, qui contient entre 2 et 10 % en poids de polysiloxane non migrant et est réticulé,
- un agent de réticulation étant contenu dans toutes les couches (4', 4") du revêtement (4) et dans la couche adhésive (7) et les couches individuelles (4', 4") et la couche adhésive (7) étant réticulées les unes avec les autres par accolage à un état encore humide ou mouillé,
- et **en ce que**, pour la liaison entre la couche intermédiaire (4") ou la couche adhésive (7) et le matériau support (2), la couche adhésive (7) formée avec une dispersion de polyuréthane est introduite ou incorporée dans le matériau support (2) à hauteur de 10 à 40 %, de préférence de 10 à 20 %, de l'épaisseur de celui-ci,
- la couche adhésive (7) formée avec une dispersion de polyuréthane étant introduite ou incorporée dans la couche support (2) à une profondeur de 0,02 à 0,6 mm, de préférence de 0,05 à 0,4 mm,
- et **en ce qu'**au plus 30 % en poids, de préférence au plus 20 % en poids, de la totalité de la dispersion de polyuréthane solidifiée contenue dans la découpe au format (1) est présente dans le matériau support (2),
- **en ce que** les zones (3) du matériau support (2) dans lesquelles la dispersion de polyuréthane de la couche adhésive (7) est introduite de manière contrôlée lors de l'application présentent une densité qui se situe entre 15 % et 55 %, de préférence entre 20 et 35 %, au-dessus de la densité des zones restantes ou exemptes de polyuréthane du matériau support (2),
- **en ce que** le poids surfacique total de polyuréthane de la découpe au format (1) est de 60 à 240 g/m², ce poids surfacique comprenant également le polyuréthane éventuellement déjà présent dans le matériau support (2) ou introduit dans celui-ci lors de sa fabrication,
- **en ce que** le poids surfacique du matériau support (2), éventuellement y compris le polyuréthane qu'il contient, est de 200 à 450 g/m²,
- **en ce que** le revêtement (4) est fabriqué avec une dispersion de polyuréthane qui présente une dureté inférieure à 68 Shore A,
- **en ce que** la couche adhésive (7) est formée avec une couche d'une dispersion de polyuréthane présentant un poids surfacique de 20 à 80 g/m², contenant éventuellement des polyacrylates et/ou des résines artificielles, et présente de préférence une structure chimique très semblable à la couche de dispersion de polyuréthane (4"), et
- **en ce que** la couche intermédiaire (4") et la couche adhésive (7) présentent une dureté inférieure à 48 Shore A, de préférence comprise entre 20 et 35 Shore A.

2. Découpe au format selon la revendication 1, **caractérisée en ce que** la teneur totale en polyuréthane de la découpe au format est de 80 à 150 g/m², notamment de 100 à 140 g/m², le poids surfacique du matériau support (2), éventuellement y compris le polyuréthane qu'il contient éventuellement, est de 200 g/m² à 350 g/m², notamment de 230 g/m² à 270 g/m², et
- **en ce que** le revêtement (4) est fabriqué avec une dispersion de polyuréthane qui présente une dureté inférieure à 55 Shore A.

3. Découpe au format selon la revendication 1 ou 2, **caractérisée en ce que** le revêtement (4), notamment appliqué sous la forme d'un film, présente un poids surfacique de 60 à 240 g/m², de préférence de 60 à 160 g/m².

4. Découpe au format selon l'une quelconque des revendications 1 à 3, **caractérisée en ce que** son revêtement (4) est essentiellement étanche à l'eau et/ou perméable à la vapeur d'eau, l'étanchéité à l'eau et la perméabilité à la vapeur d'eau étant éventuellement influencées ou ajustées par l'application de la dispersion adhésive (7) sur la couche support (2).

5. Découpe au format selon l'une quelconque des revendications 1 à 4, **caractérisée en ce que** la couche support (7) est appliquée ou incorporée sur ou dans le matériau support (2) à hauteur de 20 à 80 g/m², la couche adhésive (7) étant éventuellement appliquée, notamment pulvérisée, directement sur le matériau support (2) ou la liaison de la couche adhésive (7) avec le matériau support (2) ayant lieu indirectement par application ou insertion de la couche du matériau support (2) sur la couche adhésive (7).

6. Découpe au format selon l'une quelconque des revendications 1 à 5, **caractérisée en ce que** le revêtement (4) est formé avec deux couches reliées l'une à l'autre et inséparables, et comprend une couche supérieure (4') structurée en surface et disposée en surface, en une dispersion de polyuréthane, et une couche intermédiaire (4") disposée en dessous et reliée avec la couche supérieure (4'), formée avec une dispersion de polyuréthane contenant éventuellement des polyacrylates et/ou des résines artificielles, la couche adhésive (7) formée avec du polyuréthane et au moins partiellement incorporée dans la couche support étant prévue entre la couche de dispersion de polyuréthane (4") et la surface du matériau support (2) pour améliorer la liaison entre la couche intermédiaire (4") formée avec une dispersion de polyuréthane et le matériau support (2).

7. Découpe au format selon l'une quelconque des revendications 1 à 6, **caractérisée en ce qu'**une structure est formée sur la surface du revêtement (4), le revêtement structuré (4) présentant l'apparence de parties en mousse poncées, de caoutchouc poncé, de papier abrasif ou de nids d'abeilles, ou d'un tissu technique, tel que p. ex. un tissu ou un tricot en fibres de verre ou de carbone, ou une apparence technique ou une structure de velours ou une apparence de type cuir fleur ou nubuck.

8. Découpe au format selon l'une quelconque des revendications 1 à 7, **caractérisée en ce qu'**une couche de finition hydrophobe très mince (5) est appliquée sur la surface du revêtement (4) en une épaisseur inférieure à 0,005 mm, contenant des nanoparticules de polysiloxane ou d'une cire ou de polymères fluorés ou des mélanges de celles-ci.

9. Découpe au format selon l'une quelconque des revendications 1 à 8, **caractérisée en ce que** le revêtement (4) structuré en surface est fabriqué par pulvérisation de la dispersion de polyuréthane sur une matrice de silicone brûlante ou chaude à structure négative correspondante.

10. Découpe au format selon l'une quelconque des revendications 1 à 9, **caractérisée en ce que** le revêtement (4) fabriqué sur une matrice de silicone et appliqué sur le matériau support (2), y compris la couche adhésive (7) et le polyuréthane éventuellement contenu dans le matériau support (2), ne contient pas de solvant organique, notamment utilisé lors de la fabrication du polyuréthane, et est exempt de tels solvants organiques.

11. Découpe au format selon l'une quelconque des revendications 1 à 10, **caractérisée en ce que** le revêtement (4) comprenant la couche supérieure (4') et la couche intermédiaire (4") est formé avec un substrat ou un moule à structure négative en caoutchouc de silicone par solidification d'une dispersion contenant du polyuréthane, et la surface du revêtement (4) est fabriquée ou structurée avec cette matrice.

12. Découpe au format selon la revendication 11, **caractérisée en ce que** le revêtement (4) appliqué sur la couche adhésive (7) est appliquée à un état encore humide, notamment essentiellement sans pression et à une température inférieure ou égale à 80 °C.

13. Découpe au format selon l'une quelconque des revendications 1 à 12, **caractérisée en ce qu'**au moins une couche supplémentaire (6) est appliquée sur le côté arrière de la couche support (2), et **en ce qu'**éventuellement à une épaisseur totale de 0,9 à 6 mm, de préférence de 2 à 5 mm, le poids total de la découpe au format (1), notamment y compris la ou les couches (6) appliquées sur le côté arrière du matériau support (2), est compris entre 250 et 600 g/m², notamment entre 270 et 550 g/m².

14. Découpe au format selon l'une quelconque des revendications 1 à 13, **caractérisée en ce qu'**une couche (6) du composite d'une pellicule de mousse de polyuréthane (9) avec un tricot (8) est reliée au matériau support (2) sur son côté arrière opposé au revêtement (4).

15. Découpe au format selon l'une quelconque des revendications 1 à 14, **caractérisée en ce que** les fibres du non-tissé sont formées avec du polyester et/ou du polyamide et/ou du coton et/ou **en ce que** les fils du tricot ou du tissu sont formés à partir de polyester et/ou de polyamide, éventuellement avec une proportion de jusqu'à 40 % en poids, de préférence de jusqu'à 45 % en poids, de coton ou de fils de coton et/ou uniquement avec du coton ou des fils de coton.

16. Découpe au format selon l'une quelconque des revendications 1 à 15, **caractérisée en ce que** la couche adhésive (7) est formée à hauteur de 50 à 85 % en poids avec un polyuréthane présentant une structure cristalline et est réticulé et/ou est introduit ou incorporé à une profondeur de 0,02 à 0,6 mm, notamment de 0,05 à 0,4 mm, de la surface directement ou indirectement dans le matériau support absorbant (2) de la découpe au format (1) à partir de la surface du matériau, et/ou **en ce que** la couche adhésive (7) est appliquée sur le matériau support (2) en un poids de 20 à 80 g/m² à partir de la surface et au moins partiellement incorporée dans celui-ci.

17. Découpe au format selon l'une quelconque des revendications 1 à 16, **caractérisée en ce que** la couche intermédiaire (4") servant de couche adhésive et/ou la couche adhésive (7) contiennent à chaque fois jusqu'à 50 % en poids, de préférence jusqu'à 25 % en poids, de polyacrylates.

18. Découpe au format selon l'une quelconque des revendications 1 à 17, **caractérisée en ce que** l'épaisseur totale commune de la couche de surface (4) et la couche adhésive (7) est de 0,05 à 0,65 mm.

19. Découpe au format selon l'une quelconque des revendications 1 à 18, **caractérisée en ce que** le tricot ou tissu de polyester ou de polyamide du matériau support (2) contient entre 10 et 45 % en poids, de préférence entre 20 et 30 % en poids, de fils de coton, et/ou **en ce que** le tissu ou tricot de coton présente un poids surfacique compris entre 100 g/m² et 200 g/m² et un non-tissé éventuellement relié avec ces tissus ou tricots présente un poids surfacique de 100 g/m² à 200 g/m².

20. Découpe au format selon l'une quelconque des revendications 1 à 19, **caractérisée en ce que** la surface du revêtement (4) est configurée avec au moins deux zones différentes en termes de structure et/ou de frottements et/ou d'apparence.

21. Découpe au format selon l'une quelconque des revendications 1 à 20, **caractérisée en ce que** la couche support (2) ou le matériau support est formé avec deux textiles différents reliés l'un à l'autre, tels que p. ex. tricot-non-tissé ou tissu-non-tissé, les textiles minces moins extensibles présentant une structure à mailles larges et le revêtement (4) étant disposé à proximité ou le revêtement (4) étant appliqué sur ces textiles moins extensibles, ou les textiles moins extensibles étant incorporés essentiellement ou en totalité dans la couche adhésive (7).

22. Découpe au format selon l'une quelconque des revendications 1 à 21, **caractérisée en ce que** toutes les couches (4, 4', 4" et 7) sont assemblées ou accolées à un état humide ou mouillé, et reliées ou réticulées les unes avec les autres au moyen de l'agent de réticulation qu'elles contiennent.

23. Découpe au format selon l'une quelconque des revendications 1 à 22, **caractérisée en ce que** le matériau support (2) est formé avec des fils colorés ou présentant des couleurs différentes et/ou est imprimé en couleur, et/ou **en ce que** le matériau du revêtement (4) est transparent ou transparent coloré.

24. Découpe au format selon l'une quelconque des revendications 1 à 23, **caractérisée en ce que** la couche support ou le matériau support (2) comprend un non-tissé, sur lequel un tissu ou tricot ouvert à mailles larges est appliqué, la couche adhésive (7) ou la couche (4") étant incorporée ou introduite par pénétration dans les zones de surface du non-tissé.

25. Découpe au format selon l'une quelconque des revendications 1 à 23, **caractérisée en ce que** la couche support (2) est formée en un matériau à microfibres, présentant une faible teneur en polyuréthane, ledit polyuréthane se présentant sous la forme d'une imprégnation de polyuréthane à structure en éponge ou poreuse.

26. Articles formés avec une découpe au format (1) selon l'une quelconque des revendications 1 à 25, sous la forme de revêtements ou de rembourrages de parois intérieures d'automobiles, de sacs, de coffres, de revêtements de meubles, de vêtements, de chaussures, de selles de vélos ou de motos ou de casiers à cartes, ou utilisation de telles découpes au format pour la fabrication de ces articles.
